(19) 

Europäisches
Patentamt
European
Patent Office
Office européen
des brevets

(11) **EP 4 679 763 A1**

(12) **EUROPEAN PATENT APPLICATION**
published in accordance with Art. 153(4) EPC

(43) Date of publication:
**14.01.2026 Bulletin 2026/03**

(21) Application number: **23926682.8**

(22) Date of filing: **10.03.2023**

(51) International Patent Classification (IPC):
***H04L 9/08*** (2006.01)

(52) Cooperative Patent Classification (CPC):
**H04L 9/08**

(86) International application number:
**PCT/CN2023/080933**

(87) International publication number:
**WO 2024/187323 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **LI, Meng
Dongguan, Guangdong 523860 (CN)**
• **GAN, Lu
Dongguan, Guangdong 523860 (CN)**
• **SHI, Cong
Dongguan, Guangdong 523860 (CN)**

(74) Representative: **Penza, Giancarlo
Bugnion S.p.A.
Viale Lancetti, 17
20158 Milano (IT)**

(54) **KEY GENERATION METHOD AND DEVICE**

(57) The present application relates to a key generation method, a device, a computer readable storage medium, a computer program product, and a computer program. The method comprises: a first device sends a plurality of first messages to a second device, wherein different first messages among the plurality of first messages occupy different time domain ranges, and the plurality of first messages are used for the second device to generate a key; the first device receives a plurality of second messages sent by the second device, wherein different second messages among the plurality of second messages are related to different first messages, and the last second message among the plurality of second messages carries the key of the second device; the first device generates a verification key of the second device on the basis of the plurality of second messages and a target model; and when the verification key of the second device is consistent with the key of the second device, the first device sends an acknowledge message to the second device.

```
┌────────────────────────────────────────────────────────────────┐
│ The first device sends multiple first messages to the second    │── S310
│ device. Different first messages among the multiple first        │
│ messages occupy different time domain ranges, and the multiple   │
│ first messages are used for the second device to generate a key  │
└────────────────────────────────────────────────────────────────┘
                              │
                              ▼
┌────────────────────────────────────────────────────────────────┐
│ The first device receives multiple second messages sent by the   │── S320
│ second device. Different second messages among the multiple       │
│ second messages are related to different first messages, and a    │
│ last one of the multiple second messages carries the key of the   │
│ second device                                                     │
└────────────────────────────────────────────────────────────────┘
                              │
                              ▼
┌────────────────────────────────────────────────────────────────┐
│ The first device generates a verification key of the second       │── S330
│ device based on the multiple second messages and the target model │
└────────────────────────────────────────────────────────────────┘
                              │
                              ▼
┌────────────────────────────────────────────────────────────────┐
│ In a case that the verification key of the second device is       │── S340
│ consistent with the key of the second device, the first device    │
│ sends an acknowledgement message to the second device             │
└────────────────────────────────────────────────────────────────┘
```

**FIG. 3**

**Description**

TECHNICAL FIELD

The present disclosure relates to the field of communications, and in particular, to a method for key generation, a device, a computer readable storage medium, a computer program product, and a computer program.

BACKGROUND

With the development of communication technology, the contactless automatic identification technology has emerged, which usually performs contactless data transmission between a zero-power device and a target device by using a wireless radio frequency manner.

Since the communication channel between the zero-power device and the target device is an unsecure channel, and in order to ensure the security of data transmission between the zero-power device and the target device, a solution that the data or information transmitted between the zero-power device and the target device can be encrypted by using a key is further proposed. In this solution, the zero-power device and the target device usually use the same pairwise keys (or unicast key). However, how to ensure the security and efficiency for generating the pairwise keys has become a problem to be solved.

SUMMARY

Embodiments of the present disclosure provide a method for key generation, a device, a computer readable storage medium, a computer program product, and a computer program.

The embodiments of the present disclosure provide a method for key generation. The method includes the following operations.

The first device sends multiple first messages to the second device. Different first messages among the multiple first messages occupy different time domain ranges, and the multiple first messages are used for the second device to generate the key.

The first device receives multiple second messages sent by the second device. Different second messages among the multiple second messages are related to different first messages, and a last one of the multiple second messages carries the key of the second device.

The first device generates a verification key of the second device based on the multiple second messages and a target model.

In a case that the verification key of the second device is consistent with the key of the second device, the first device sends an acknowledgement message to the second device.

In an embodiment of the present disclosure, the operation that the first device generates the verification key of the second device based on the multiple second messages and the target model includes the following operations.

The first device obtains multiple parameter estimation values based on the multiple second messages and the target model. Different parameter estimation values among the multiple parameter estimation values are estimation values of related parameters of different first messages obtained by the second device.

The first device determines the verification key of the second device based on the multiple parameter estimation values.

In an embodiment of the present disclosure, the operation that the first device obtains the multiple parameter estimation values based on the multiple second messages and the target model includes the following operations.

The first device preprocesses a related parameter of each of the multiple second messages to obtain a preprocessed related parameter of each second message.

The first device inputs the preprocessed related parameter of each second message into the target model to obtain the multiple parameter estimation values output by the target model.

In an embodiment of the present disclosure, the operation that the first device preprocesses the related parameter of each of the multiple second messages to obtain the preprocessed related parameter of each second message includes the following operation.

The first device determines the first standard deviation and the first mean value based on the related parameter of each of the multiple second messages.

The first device preprocesses the related parameter of each second message based on the first mean value and the first standard deviation, to obtain the preprocessed related parameter of each second message.

In some possible embodiments, the operation that the first device obtains multiple parameter estimation values based on the multiple second messages and the target model includes the following operation.

The first device inputs a related parameter of each of the multiple second messages into the target model to obtain the multiple parameter estimation values output by the target model. The target model is used to preprocess the related parameter of each second message to obtain a preprocessed related parameter of each second message, and the multiple parameter estimation values are obtained based on the preprocessed related parameter of each second message.

In an embodiment of the present disclosure, the last second message carries multiple quantization offsets, and different quantization offsets among the multiple quantization offsets are associated with the related parameters of different first messages obtained by the second device.

The operation that the first device determines the verification key of the second device based on the multiple parameter estimation values includes the following operations. The first device obtains multiple quantization reference estimation values based on the multiple parameter estimation values and the multiple quantization offsets. The first device determines multiple quantization estimation results based on an index value of each of the multiple quantization reference estimation values. The first device obtains the verification key of the second device based on the multiple quantization estimation results.

In an embodiment of the present disclosure, the related parameter includes reception strength.

In an embodiment of the present disclosure, the related parameter include phase.

The embodiments of the present disclosure provide a method for key generation. The method includes the following operations.

The second device receives multiple first messages sent by the first device. Different first messages among the multiple first messages occupy different time domain ranges.

The second device generates a key of the second device based on the multiple first messages.

The second device sends multiple second messages to the first device. Different second messages among the multiple second messages are related to different first messages, and a last one of the multiple second messages carries the key of the second device.

In a case that the second device receives an acknowledgement message sent by the first device, the second device determines that a key verification of the second device is passed.

In an embodiment of the present disclosure, the operation that the second device generates the key of the second device based on the multiple first messages includes the following operations.

The second device obtains the second mean value and the second standard deviation based on a related parameter of each of the multiple first messages.

The second device obtains multiple processed related parameters based on the second mean value, the second standard deviation, and the related parameter of each first message.

The second device obtains multiple quantization reference values based on the multiple processed related parameters.

The second device generates the key of the second device based on the multiple quantization reference values.

In an embodiment of the present disclosure, the operation that the second device generates the key of the second device based on the multiple quantization reference values includes the following operations.

The second device determines multiple quantization results based on an index value of each of the multiple quantization reference values.

The second device generates the key of the second device based on the multiple quantization results.

In an embodiment of the present disclosure, the last second message carries multiple quantization offsets, and the method further includes the following operation.

The second device obtains the multiple quantization offsets based on the multiple quantization reference values and the multiple processed related parameters.

In an embodiment of the present disclosure, the related parameter is reception strength.

In an embodiment of the present disclosure, the related parameter is phase.

The embodiments of the present disclosure provide the first device. The first device includes the first communication unit and the first processing unit.

The first communication unit is configured to send multiple first messages to the second device. Different first messages among the multiple first messages occupy different time domain ranges, and the multiple first messages are used for the second device to generate the key, and receive multiple second messages sent by the second device. Different second messages among the multiple second messages are related to different first messages, and a last one of the multiple second messages carries the key of the second device.

The first processing unit is configured to generate a verification key of the second device based on the multiple second messages and a target model. The first communication unit is further configured to send an acknowledgement message to the second device in a case that the verification key of the second device is consistent with the key of the second device.

In an embodiment of the present disclosure, the first processing unit is configured to obtain multiple parameter estimation values based on the multiple second messages and the target model, and determine the verification key of the second device based on the multiple parameter estimation values. Different parameter estimation values among the multiple parameter estimation values are estimation values of related parameters of different first messages obtained by the second device.

In an embodiment of the present disclosure, the first processing unit is configured to preprocess a related parameter of each of the multiple second messages to obtain a preprocessed related parameter of each second message, and input the preprocessed related parameter of each second message into the target model to obtain the multiple parameter estimation values output by the target model.

In an embodiment of the present disclosure, the first processing unit is configured to determine the first standard deviation and the first mean value based on the related parameter of each of the multiple second messages, and preprocess the related parameter of each second message based on the first mean value and the first standard deviation, to obtain the preprocessed related parameter of each second message.

In an embodiment of the present disclosure, the first processing unit is configured to input a related parameter of each of the multiple second messages into the target model to obtain the multiple parameter estimation values output by the target model. The target model is used to preprocess the related parameter of each second message to obtain a preprocessed related parameter of each second message, and the multiple parameter estimation values are obtained based on the preprocessed related parameter of each second message.

In an embodiment of the present disclosure, the last second message carries multiple quantization offsets, and different quantization offsets among the multiple quantization offsets are associated with the related parameters of different first messages obtained by the second device. The first processing unit is configured to obtain multiple quantization reference estimation values based on the multiple parameter estimation values and the multiple quantization offsets, determine multiple quantization estimation results based on an index value of each of the multiple quantization reference estimation values, and obtain the verification key of the second device based on the multiple quantization estimation results.

In an embodiment of the present disclosure, the related parameter includes reception strength.

In an embodiment of the present disclosure, the related parameter includes phase.

The embodiments of the present disclosure provide the second device. The second device includes the second communication unit and the second processing unit.

The second communication unit is configured to receive multiple first messages sent by the first device, and send multiple second messages to the first device. Different first messages among the multiple first messages occupy different time domain ranges. Different second messages among the multiple second messages are related to different first messages, and a last one of the multiple second messages carries a key of the second device.

The second processing unit is configured to generate the key of the second device based on the multiple first messages, and in a case that an acknowledgement message sent by the first device is received through the second communication unit, determine that a key verification of the second device is passed.

In an embodiment of the present disclosure, the second processing unit is configured to obtain the second mean value and the second standard deviation based on a related parameter of each of the multiple first messages, obtain multiple processed related parameters based on the second mean value, the second standard deviation, and related parameter of each first message, obtain multiple quantization reference values based on the multiple processed related parameters, and generate the key of the second device based on the multiple quantization reference values.

In an embodiment of the present disclosure, the second processing unit is configured to determine multiple quantization results based on an index value of each of the multiple quantization reference values, and generate the key of the second device based on the multiple quantization results.

In an embodiment of the present disclosure, the last second message carries multiple quantization offsets. The second processing unit is configured to obtain the multiple quantization offsets based on the multiple quantization reference values and the multiple processed related parameters.

In an embodiment of the present disclosure, the related parameter is reception strength.

In an embodiment of the present disclosure, the related parameter is phase.

The embodiments of the present disclosure provide the first device. The first device includes a processor and a memory. The memory is configured to store a computer program, and the processor is configured to invoke and execute the computer program stored in the memory to cause the first device to perform the above method.

The embodiments of the present disclosure provide the second device. The second device includes a processor and a memory. The memory is configured to store a computer program, and the processor is configured to invoke and execute the computer program stored in the memory to cause the second device to perform the above method.

The embodiments of the present disclosure provide a chip for implementing the above method.

Specifically, the chip includes a processor. The processor is configured to invoke and execute a computer program from a memory to cause a device on which the chip is mounted to perform the above method.

The embodiments of the present disclosure provide a computer readable storage medium. The computer readable storage medium is configured to store a computer program that, when executed by a device, causes the device to perform the above method.

The embodiments of the present disclosure provide a computer program product. The computer program product includes computer program instructions that cause a computer to perform the above method.

The embodiments of the present disclosure provide a computer program. When the computer program is run on a computer, the computer performs the above method.

In the solutions provided by the present embodiments, the first device sends multiple first messages, the multiple first messages are used for the second device to generate a key, the first device receives multiple second messages sent by the second device, and a last one of the multiple second messages carries the key of the second device. The first device generates a verification key based on the multiple second messages and the target model, and sends an acknowledgement message in a case of determining that the verification key is consistent with the key. In this way, since the key of the second device is generated according to the multiple first messages, and the verification key obtained by the first device is generated according to the multiple second messages, the randomness for generating the key thus can be guaranteed and so that the security of the key can be guaranteed. In addition, since the verification key is generated by the first device according to the multiple second messages and the target model, the efficiency for generating the verification key by the first device can be guaranteed. Due to the short-term reciprocity of channel between the first device and the second device, the consistency of the verification key obtained by the first device and the key obtained by the second device can also be ensured.

BRIEF DESCRIPTION OF THE DRAWINGS

FIG. 1 is a schematic diagram of an application scenario according to an embodiment of the present disclosure.
FIG. 2 is a schematic diagram of a backscatter-based zero-power communication system.
FIG. 3 is a schematic flowchart of a method for key generation according to an embodiment of the present disclosure.
FIG. 4 is a schematic flowchart of a method for key generation according to another embodiment of the present disclosure.
FIG. 5 is a schematic diagram of a correspondence relationship among candidate quantization reference values, index values corresponding to the candidate quantization reference values and quantization values according to an embodiment of the present disclosure.
FIG. 6 is an exemplary flowchart of processing flows of a method for key generation according to an embodiment of the present disclosure.
FIG. 7 is another exemplary flowchart of processing flows of a method for generating a key according to an embodiment of the present disclosure.
FIG. 8 is a schematic diagram of a processing scenario of a method for key generation according to an embodiment of the present disclosure.
FIG. 9 is another schematic diagram of processing flows of a method for key generation according to an embodiment of the present disclosure.
FIG. 10 is a schematic diagram of a processing of a Long Short-Term Memory (LSTM) according to an embodiment of the present disclosure.
FIG. 11 to FIG. 12 are exemplary diagrams of various simulation experiment results based on the method for key generation provided by the embodiments of the present disclosure.
FIG. 13 is a schematic block diagram of the first device according to an embodiment of the present disclosure.
FIG. 14 is a schematic block diagram of the second device according to an embodiment of the present disclosure.
FIG. 15 is a schematic block diagram of a communication device according to an embodiment of the present disclosure.
FIG. 16 is a schematic block diagram of a chip according to an embodiment of the present disclosure.
FIG. 17 is a schematic block diagram of a communication system according to an embodiment of the present disclosure.

DETAILED DESCRIPTION

Hereinafter, the technical solutions in the embodiments of the present disclosure will be described with reference to the drawings in the embodiments of the present disclosure.

The technical solutions of the embodiments of the present disclosure may be applied to various communication systems, such as Global System for Mobile Communications (GSM), Code Division Multiple Access (CDMA), Wideband Code Division Multiple Access (WCDMA), General Packet Radio Service (GPRS), Long Term Evolution (LTE), LTE-Advanced (LTE-A), New Radio (NR), evolution of NR, Wireless Local Area Network (WLAN), Wireless Fidelity (WiFi), or other communication systems.

The present disclosure describes various embodiments in combination with the network device and the terminal. The terminal may be mobile or fixed, and the terminal may also be referred to as a mobile station, a subscriber unit, or the like. The terminal may be a station in a WLAN, and may be a smart terminal, a wireless modem, a notebook computer, a tablet computer, or the like. In the embodiments of the present disclosure, the terminal may be a Virtual Reality (VR) terminal/ Augmented Reality (AR) terminal, an industrial control terminal, an unmanned driving terminal, a telemedicine terminal, a smart grid terminal, a transportation security terminal, a smart city terminal, a wireless terminal of a smart home, or the like. As an example and not limitation, in the embodiments of the present disclosure, the terminal may also be a wearable device.

In the embodiments of the present disclosure, the network device may be a device for communicating with a terminal, and the network device may be an access point in a WLAN, a base station in a GSM, CDMA, or WCDMA, an evolved base station in the LTE, a relay station, an in-vehicle device, a wearable device, a network device (gNB) in an NR network, a network device in a future evolved Public Land Mobile Network (PLMN) network, a network device in a non-terrestrial network, or the like. By way of example and not limitation, in embodiments of the present disclosure, the network device may have mobile characteristics, for example, the network device may be a mobile device.

It should be understood that the terms "system" and "network" are often used interchangeably herein. Herein, the term "and/or" is only used for describing an association relationship between association objects, and means that there may be three relationships, for example, A and/or B, which may mean that A exists alone, A and B exist simultaneously, and B exists alone. In addition, the character "/" in the present disclosure generally indicates that there is an "or" relationship between the association objects. It should be understood that the "indication" mentioned in the embodiments of the present disclosure may be a direct indication, an indirect indication, or used for describing an association relationship. For example, A indicates B, which may mean that A directly indicates B, for example, B may be acquired by A. It may also mean that A indicates B indirectly, for example A indicates C, and B may be acquired through C. It may also be indicated that there is an association relationship between A and B. In the description of the embodiments of the present disclosure, the term "correspondence" may indicate that there is a direct correspondence or indirect correspondence relationship between the two objects, may indicate that there is an association relationship between the two objects, or may indicate a relationship between indicating and being instructed, configuring and being configured, or the like.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as optional solutions, and all of them belong to the scope of protection of the embodiments of the present disclosure.

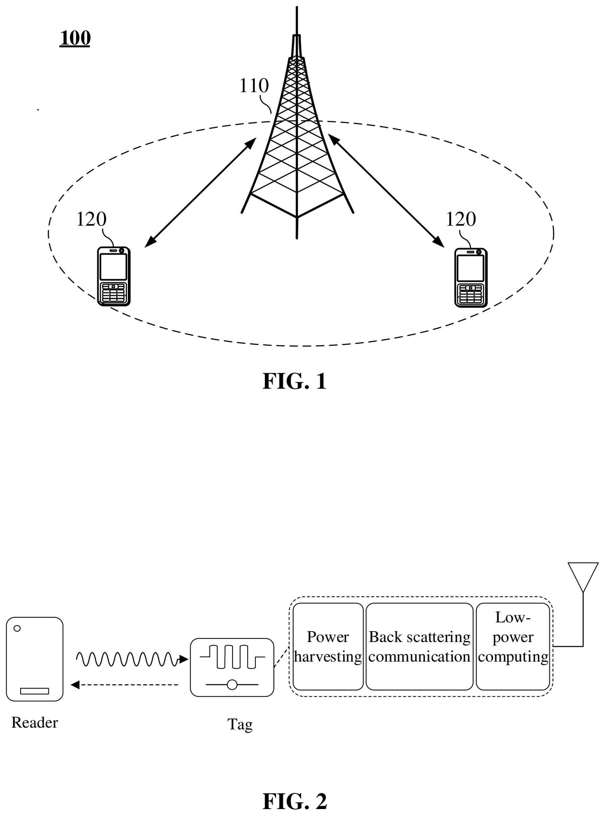

FIG. 1 exemplarily illustrates a communication system 100. The communication system includes a network device 110 and two terminals 120. In one possible implementation, the communication system 100 may include multiple network devices 110, and the coverage range of each network device 110 may include another number of terminals 120, which is not limited in the embodiments of the present disclosure. In one possible implementation, the communication system 100 may further include a mobility management entity, an access and mobility management function, and other network entities, which are not limited in the embodiments of the present disclosure. The network device may further include an access network device and a core network device. That is, the communication system may further include multiple core networks for communicating with the access network device. The access network device may be a base station in an LTE, LTE-A, or NR system. Taking the communication system illustrated in FIG. 1 as an example, the communication device may include a network device and a terminal having a communication function, and the communication device may further include other devices in the communication system, such as other network entities such as a network controller and a mobility management entity, which is not limited in the embodiments of the present disclosure.

In order to facilitate understanding of the embodiments of the present disclosure, basic procedures and basic concepts related to the embodiments of the present disclosure will be briefly described below. It should be understood that the basic procedures and basic concepts described below do not limit the embodiments of the present disclosure.

Zero-power communication is a wireless communication technology suitable for short-distance and low-speed. The basic architecture of the zero-power communication system is illustrated in FIG. 2, which includes a Reader and a Tag. The Tag may have functions such as power harvesting, back scattering communication, low-power computing, and the like. The Tag is a type of zero-power device. In actual scenarios, the zero-power device may also be an ordinary device, which is not limited here. The outstanding technical advantage of the zero-power communication is battery-free communication.

In a zero-power communication system based on back scattering, the zero-power device modulates and reflects the received Radio Frequency (RF) signal through a backscatter transmitter to transmit data. Based on the power sources and usage methods of the zero-power device, the zero-power device may be classified into: passive zero-power device, semi-passive zero-power device, and active zero-power device. The passive zero-power device does not need built-in batteries, but generates the induced current by an antenna through electromagnetic induction, and the induced current drives the low-power chip circuit of the zero-power device. The semi-passive zero-power device does not install normal batteries, but may use the RF power harvesting module to harvest radio wave power, and store the harvested power in a power storage unit, and after the power storage unit has power, the low-power chip circuit of the semi-passive zero-power device may be driven. The active zero-power device may have built-in batteries to drive the low-power chip circuit of the active zero-power device, so as to realize the demodulation of forward link signals and the modulation of backlink signals.

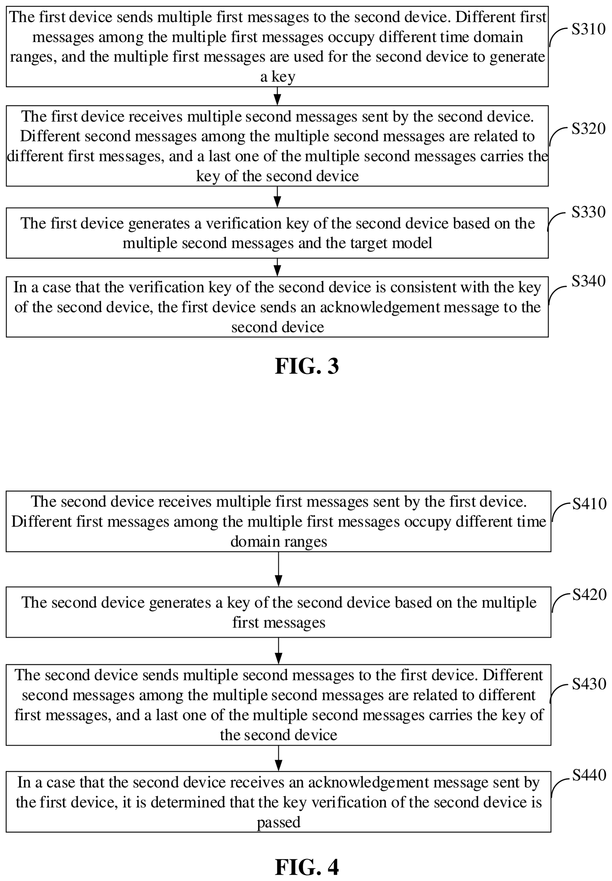

FIG. 3 is a schematic flowchart of a method for key generation according to an embodiment of the present disclosure. The method includes at least part of the following contents.

In operation S310, the first device sends multiple first messages to the second device. Different first messages among the multiple first messages occupy different time domain ranges, and the multiple first messages are used for the second device to generate a key.

In operation S320, the first device receives multiple second messages sent by the second device. Different second messages among the multiple second messages are related to different first messages, and a last one of the multiple second messages carries the key of the second device.

In operation S330, the first device generates a verification key of the second device based on the multiple second messages and the target model.

In operation S340, in a case that the verification key of the second device is consistent with the key of the second device, the first device sends an acknowledgement message to the second device.

Here, the first device may be the first terminal or the first network device. The second device may be a zero-power device.

FIG. 4 is a schematic flowchart of a method for key generation according to another embodiment of the present disclosure. The method includes at least part of the following contents.

In operation S410, the second device receives multiple first messages sent by the first device. Different first messages among the multiple first messages occupy different time domain ranges.

In operation S420, the second device generates a key of the second device based on the multiple first messages.

In operation S430, the second device sends multiple second messages to the first device. Different second messages among the multiple second messages are related to different first messages, and a last one of the multiple second messages carries the key of the second device.

In operation S440, in a case that the second device receives an acknowledgement message sent by the first device, it is determined that the key verification of the second device is passed.

The number of the multiple first messages is the same as the number of the multiple second messages. The multiple first messages may be the multiple first messages for generating the key. Different second messages among the multiple second messages being related to different first messages, which may mean that different second messages among the multiple second messages are messages that performing reflection on different first messages.

In some possible embodiments, the operation that the second device generates the key of the second device based on the multiple first messages may include that the second device generates the key of the second device based on a related parameter of each of the multiple first messages.

Specifically, the operation that the second device generates the key of the second device based on the multiple first messages includes the following operations. The second device obtains the second mean value and the second standard deviation based on a related parameter of each of the multiple first messages. The second device obtains multiple processed related parameters based on the second mean value, the second standard deviation, and the related parameter of each first message. The second device obtains multiple quantization reference values based on the multiple processed related parameters. The second device generates the key of the second device based on the multiple quantization reference values.

The operation that the second device obtains the multiple quantization reference values based on the multiple processed related parameters includes the following operation. The second device determines, based on multiple candidate quantization reference values, a candidate quantization reference value with a minimum difference from an m-th processed related parameter to be an m-th quantization reference value. The multiple candidate quantization reference values are determined based on the related parameter of each first message, the m-th processed related parameter is one of the multiple processed related parameters, the m-th quantization reference value is one of the multiple quantization reference values, and m is a positive integer.

The operation that the second device generates the key of the second device based on the multiple quantization reference values includes the following operation. The second device determines multiple quantization results based on an index value of each of the multiple quantization reference values. The second device generates the key of the second device based on the multiple quantization results.

The related parameter is reception strength, or the related parameter is a phase. Hereinafter, a specific process of generating the key by the second device in the case of different related parameters will be described.

In some embodiments, the above related parameter is the reception strength. The related parameter of the first message is the reception strength of the first message. The processed related parameter is the processed reception strength. In some possible examples, the above reception strength may also be referred to as the reception signal strength.

Taking any one of the multiple first messages being the m-th first message as an example, the method for obtaining the reception strength of the m-th first message by the second device may include the following operations. The second device performs multiple times of measurements within the duration of the m-th first message to obtain multiple strength measurement values of the m-th first message. The multiple strength measurement values of the m-th first message are averaged to obtain the reception strength of the m-th first message, where m is an integer greater than or equal to 1. Since the method for obtaining the reception strength of each first message by the second device is the same as the method for obtaining the reception strength of the m-th first message, details will not be described one by one. Here, the multiple times of measurements performed by the second device within the duration of the m-th first message may be performed by the second device according to a preset measurement period. The length of the measurement period is less than the duration of any one message. For example, the duration of any one message is 1 millisecond, and the measurement period may be 0.1 milliseconds, 0.05 milliseconds, or longer or shorter, which are not exhaustive here.

The operation that the second device obtains the second mean value and the second standard deviation based on the related parameter of each of the multiple first messages may specifically include the following operation. The second device obtains the second mean value and the second standard deviation based on the reception strength of each of the multiple first messages. In the present embodiment, the second mean value is specifically a mean value of the reception strengths of the first messages, and the second standard deviation is specifically a standard deviation of the reception strengths of the first messages.

The operation that the second device obtains the multiple processed related parameters based on the second mean value, the second standard deviation, and the related parameter of each first message specifically includes the following operation. The second device divides a difference between the reception strength of the m-th first message and the mean value of the reception strengths of the first messages by the standard deviation of the reception strengths of the first messages to obtain the m-th processed reception strength. Since the processing method for each first message is the same as that of the m-th first message, details will not be described one by one. For example, it is assumed that the number of the first messages for generating the key is M, M is an integer greater than or equal to 2, and the reception strength is represented by a Received Signal Strength Indicator (RSSI). The RSSIs of the M first messages may form a set, which is represented as $\{RSSI_T^m\} = \{RSSI_T^1, RSSI_T^2, \ldots, RSSI_T^M\}$, $T$ represents the second device, $\{RSSI_T^m\}$ represents a set of RSSIs of the M first messages obtained by the second device. Further, it is assumed that the mean value of the reception strengths of the first messages is represented as $RSSI_T^{ave}$, and the standard deviation of the reception strengths of the first messages is represented as $RSSI_T^{std}$, then the second device may obtain the m-th processed reception strength by using the following formula: $\{\overline{RSSI_T^m}\} = [\{RSSI_T^m\} - RSSI_T^{ave}]/RSSI_T^{std}$.

$\{\overline{RSSI_T^m}\}$ is a set composed of M processed reception strengths, and any one processed reception strength in the set may be above m-th processed reception strength.

The operation that the second device determines, based on the multiple candidate quantization reference values, the candidate quantization reference value with the minimum difference from the m-th processed related parameter to be the m-th quantization reference value may include the following operation. The second device determines, based on the multiple candidate quantization reference values, the candidate quantization reference value with a minimum difference from the m-th processed reception strength to be the m-th quantization reference value. The multiple candidate quantization reference values are determined based on the reception strength of each first message, the m-th processed reception strength is one of the multiple processed related parameters, and the m-th quantization reference value is one of the multiple quantization reference values. Since the method for determining each of the multiple quantization reference values is the same as the method for determining the m-th quantization reference value, details will not be described one by one.

In the present embodiment, the quantization reference value may specifically be a strength quantization reference value, the candidate quantization reference value may be a candidate strength quantization reference value, and the quantization reference set may be a strength quantization reference set. For example, the m-th strength quantization reference value may be obtained according to the following formula:

$$\{\overline{RSSI_T^m}\} = argmin_{q \in Q_k}\left|q - \overline{RSSI_T^m}\right|$$

, *argmin* represents calculating a value of a variable enabling the objective function being the minimum value, the variable is q, the objective function is $\left|q - \overline{RSSI_T^m}\right|$, the objective function $\left|q - \overline{RSSI_T^m}\right|$ represents an absolute value of a difference between the variable q and the m-th processed reception strength, $Q_k$ represents the strength quantization reference set, K represents the number of candidate strength quantization reference values included in the strength quantization reference set, $q \in Q_k$ represents that the variable q is a candidate strength quantization reference value in the set $Q_k$, $\overline{RSSI_T^m}$ represents the m-th processed reception strength, and $\overline{\overline{RSSI_T^m}}$ represents the m-th strength quantization reference value. The finally obtained M quantization reference values may be represented in the following set form $\left\{ \overline{\overline{RSSI_T^1}}, \ldots\ldots, \overline{\overline{RSSI_T^M}} \right\}$.

The strength quantization reference set $Q_k$ may include K candidate quantization reference values, and the strength quantization reference set $Q_k$ is a subset within a range $\left[ RSSI_T^{min}, RSSI_T^{max} \right]$. The K candidate strength quantization reference values are arranged in an ascending order, and each candidate strength quantization reference value has a corresponding index value in the strength quantization reference set. In the K candidate strength quantization reference values, the interval between any adjacent candidate strength quantization reference values is the same, that is, the K candidate strength quantization reference values are uniformly spaced. The value of K may be related to the length b of the quantization result of a single first message, for example, $k = 2^b$, and it is assumed that b equals 4, then K equals 16. Exemplarily, the strength quantization reference set may be represented as $Q_k = \{q_1, q_1, \ldots, q_k\}$ subscripts 1 to K of q are index value of each candidate strength quantization reference value in the strength quantization reference set. $q_1 \sim q_k$ represent K candidate strength quantization reference values, the K candidate strength quantization reference values are arranged in an ascending order, and the interval between any adjacent candidate strength quantization reference values is the same.

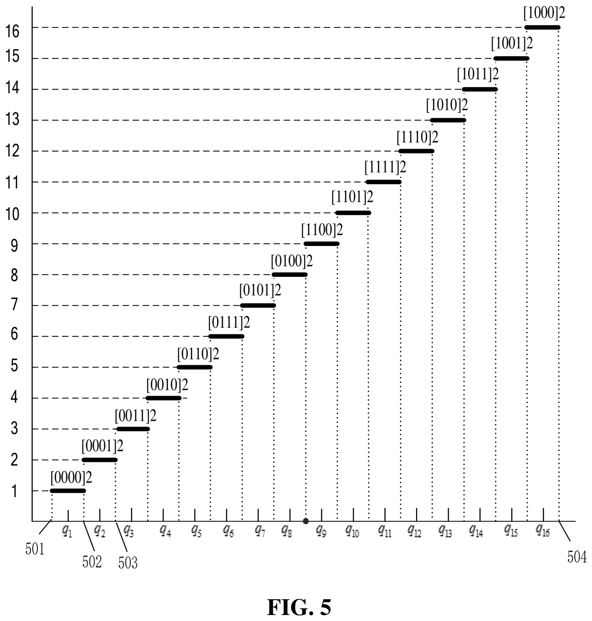

The strength quantization reference set may be determined by the second device based on the reception strength of each of the multiple first messages. Specifically, the process of generating the strength quantization reference set by the second device may include the following operations. The second device determines, from the reception strength of each of the multiple first messages, a maximum reception strength and a minimum reception strength. K intervals are divided between the maximum reception strength and the minimum reception strength. An intermediate value is selected in each of the K intervals, and the select intermediate values are considered to be K candidate strength quantization reference values in the strength quantization reference set, and the differences between the maximum values and the minimum values in different intervals in the K intervals are the same. As an exemplary description with reference to FIG. 5, it assumed that K is 16 and the maximum reception strength and the minimum reception strength are represented as $\left[ RSSI_T^{min}, RSSI_T^{max} \right]$. In FIG. 5, the horizontal axis represents the candidate strength quantization reference value, the left point 501 in the horizontal axis represents the minimum reception strength $RSSI_T^{min}$, and the last point 504 in the horizontal axis represents the maximum reception strength $RSSI_T^{max}$. It is assumed that 501 ~ 502 represent the first interval and 502 ~ 503 represent the second interval, and it may be seen that the sizes of the first interval and the second interval are the same, that is, the differences between the maximum values and the minimum values of these two intervals are the same, and other intervals will not be further elaborated. $q_1$ is the intermediate value of the first interval, which is the first candidate strength quantization reference value, and so on, $q_2$-$q_{16}$ are the second to sixteenth candidate strength quantization reference values respectively, which are the intermediate values of their respective intervals. As illustrated in FIG. 5, the intervals between any adjacent candidate strength quantization reference values are the same. Finally, 16 candidate strength quantization reference values in the strength quantization reference set may be obtained, which can be represented as $Q_k = \{q_1, q_1, \ldots, q_{16}\}$.

The operation that the second device generates the key of the second device based on the multiple quantization reference values includes the following operations. The second device determines multiple quantization results based on an index value of each of the multiple quantization reference values. The second device generates the key of the second device based on the multiple quantization results. In the multiple quantization results, a length of each quantization result is b, and b is an integer greater than or equal to 2.

Specifically, the second device may obtain the index value of each of the multiple quantization reference values in the following manner. The second device inputs the m-th strength quantization reference value among the multiple strength quantization reference values into a preset classification formula to obtain an index value of the m-th strength quantization reference value output by the preset classification formula. The index value may refer to an index value corresponding to the m-th strength quantization reference value in the strength quantization reference set. For example, the aforementioned preset classification formula may be represented as $f1\left( \overline{\overline{RSSI_T^m}} \right) = index_1$, $f1(*)$ represents a calculation function of the preset classification formula, $\overline{\overline{RSSI_T^m}}$ represents the m-th strength quantization reference value, and $index_1$ represents an index value, which is an integer greater than or equal to 1 and less than or equal to K. Since the method for determining the index value of each strength quantization reference value is the same as the method for determining the index value of the m-th strength quantization reference value, details will not be described one by one.

The operation that the second device determines the multiple quantization results based on the index value of each of the multiple quantization reference values may include the following operations. The second device determines a quantization value corresponding to the index value of each of the multiple strength quantization reference values based on a quantization mapping relationship, and takes quantization values, each corresponding to an index value of a respective one of the multiple strength quantization reference values, as multiple quantization results. Alternatively, the second device inputs an index value of each of the multiple strength quantization reference values into an encoder, to obtain quantization values, each corresponding to a respective one of strength quantization reference values, output by the encoder respectively, and takes the quantization values, each corresponding to the index value of a respective one of the strength quantization reference values, as the multiple quantization results.

The quantization mapping relationship may include K candidate index values and a candidate quantization value corresponding to each of the K candidate index values, and the quantization mapping relationship may be preset according to an actual situation. Taking FIG. 5 as an example, it is assumed that K is equal to 16, and the vertical axis in FIG. 5 represents 16 candidate index values, that is, the quantization mapping relationship specifically includes: the candidate quantization value corresponding to the candidate index value 1 is 0000, the candidate quantization value corresponding to the candidate index value 2 is 0001, the candidate quantization value corresponding to the candidate index value 3 is 0011, and so forth, and the 16 candidate index values and candidate quantization values corresponding to the 16 candidate index values illustrated in FIG. 5 will not be described one by one. Further, in FIG. 5, the candidate quantization value corresponding to the candidate index value "1" is represented as [0000]2, and [0000]2 is used for representing a set of binary bit values is 0000, and the other candidate quantization values in FIG. 5 are similar to it, and the description thereof will not be repeated.

The encoder may be a Goreme encoder, for example, which may be represented as $g\{index_1\}$, and $index_1$ represents that the input is an index value of any strength quantization reference value, and $g\{*\}$ represents a calculation function of the Goreme encoder. That is, in the method of processing by using an encoder, any one quantization value may be obtained by using a formula $g\left(f1\left(\overline{RSSI_T^m}\right)\right)$. Still as an exemplary description with reference to FIG. 5, it is assumed that the m-th strength quantization reference value is equal to $q_1$ in FIG. 5, the index value of the m-th strength quantization reference value may be 1 based on the aforementioned preset classification formula. The quantization value obtained by inputting the index value "1" to $g(w)$ is "0000" as illustrated in FIG. 5, and then "0000" may be taken as the m-th quantization result among m quantization results.

The operation that the second device generates the key of the second device based on the multiple quantization results specifically may include the following operation. The second device combines the multiple quantization results to obtain the key of the second device. Taking the number of the multiple quantization results being M as an example, the length of each quantization result is b, then the key length of the second device equals M multiplied by b. It is assumed b = 4 and M = 32, the key length (Keylen) of the second device equals 128.

In other embodiments, the above related parameter is the phase. The related parameter of the first message is the phase of the first message, and the processed related parameter is the processed phase.

Taking any one of the multiple first messages being the m-th first message as an example, the method for obtaining the phase of the m-th first message by the second device may include the following operations. The second device obtains the phase of the m-th first message by performing measurement within the duration of the m-th first message, and m is an integer greater than or equal to 1. Since the method for obtaining the phase of each first message by the second device is the same as the method for obtaining the phase of the m-th first message, details will not be described one by one.

The operation that the second device obtains the second mean value and the second standard deviation based on the related parameter of each of the multiple first messages may specifically include the following operation. The second device obtains the second mean value and the second standard deviation based on a phase of each of the multiple first messages. In this embodiment, the second mean value is specifically a mean value of phases of the first messages, and the second standard deviation is specifically a phase standard deviation of the first messages.

The operation that the second device obtains the multiple processed related parameters based on the second mean value, the second standard deviation, and related parameter of each first message specifically includes the following operation. The second device divides a difference between the phase of the m-th first message and the mean value of phases of the first messages by the phase standard deviation of the first messages to obtain the m-th processed phase. Since the processing method for each first message is the same as the processing method for the m-th first message, details will not be described one by one. For example, it is assumed that the specific number of the multiple first messages is M, the phases of the M first messages may form a set, which is represented as $\{\varphi_T^m\} = \{\varphi_T^1, \varphi_T^2, ..., \varphi_T^M\}$, $T$ represents the second device, and $\{\varphi_T^m\}$ represents a set of the phases of first messages obtained by the second device. Further, it is assumed that the mean value of phases of the first messages is represented as $\varphi_T^{ave}$, and the phase standard deviation of the first messages is represented as $\varphi_T^{std}$, then the second device may obtain the m-th processed phase by using the following formula: $\left\{\overline{\varphi_T^m}\right\} = \frac{\{\varphi_T^m\} - \varphi_T^{ave}}{\varphi_T^{std}}$. Here, $\left\{\overline{\varphi_T^m}\right\}$ is a set composed of M processed phases, and any one processed phase in the set may be aforementioned m-th processed phase.

The operation that the second device determines, based on the multiple candidate quantization reference values, the candidate quantization reference value with the minimum difference from the m-th processed related parameter to be the m-th quantization reference value may include the following operation. The second device determines, based on the multiple candidate quantization reference values, the candidate quantization reference value with a minimum difference from the m-th processed phase to be the m-th quantization reference value. The multiple candidate quantization reference values are determined based on the phase of each first message, the m-th processed phase is one of the multiple processed related parameters, and the m-th quantization reference value is one of the multiple quantization reference values. Since the method for determining each of the multiple quantization reference values is the same as the method for determining the m-th quantization reference value, details will not be described one by one.

In the present embodiment, the quantization reference value may be a phase quantization reference value, the candidate quantization reference value may be a candidate phase quantization reference value, and the quantization reference set may be a phase quantization reference set. For example, the m-th phase quantization reference value may be obtained by using the following formula: $\left\{\overline{\varphi_T^m}\right\} = argmin_{q \in Q_k}\left|q - \overline{\varphi_T^m}\right|$, *argmin* represents calculating a value of a variable enabling the objective function being the minimum value, the variable is q, the objective function is $\left|q - \overline{\varphi_T^m}\right|$, the objective function $\left|q - \overline{\varphi_T^m}\right|$ represents an absolute value of a difference between the variable q and the m-th processed phase, $Q_k$ represents the phase quantization reference set of the second device, K represents the number of candidate phase quantization reference values included in the phase quantization reference set, $q \in Q_k$ represents that the variable q is a candidate phase quantization reference value in the set $Q_k$, $\overline{\varphi_T^m}$ represents the m-th processed phase, and $\overline{\overline{\varphi_T^m}}$ represents the m-th phase quantization reference value. The multiple phase quantization reference values are finally obtained. It is assumed that the number of the multiple phase quantization reference values is M, then the M phase quantization reference values may be represented as $\left\{\overline{\overline{\varphi_T^1}}, \dots \dots, \overline{\overline{\varphi_T^M}}\right\}$.

The phase quantization reference set may be determined by the second device based on the phase of each first message. The process of generating the quantization reference set by the second device may include the following operations. The second device determines a maximum phase and a minimum phase from the phase of each of the multiple first messages. K intervals are divided between the maximum phase and the minimum phase. An intermediate value is selected in each of the K intervals, and the selected intermediate values are considered to be K candidate phase quantization reference values in the phase quantization reference set, and the differences between the maximum values and the minimum values of different intervals in the K intervals are the same. The phase quantization reference set $Q_k$ may include K candidate phase quantization reference values, and the phase quantization reference set $Q_k$ is a subset within a range $\left[\varphi_T^{min}, \varphi_T^{max}\right]$. Here, $\varphi_T^{min}$ is the minimum phase and $\varphi_T^{max}$ is the maximum phase. The K candidate phase quantization reference values are arranged in an ascending order, and each candidate phase quantization reference value has a corresponding index value in the phase quantization reference set. In the above specified number of candidate phase quantization reference values, the interval between any adjacent candidate phase quantization reference values is the same. Exemplarily, the phase quantization reference set may be represented as: $Q_k = \{q_1, q_1, \dots, q_k\}$.

The operation that the second device generates the key of the second device based on the multiple quantization reference values includes the following operations. The second device determines multiple quantization results based on an index value of each of the multiple quantization reference values. The second device generates the key of the second device based on the multiple quantization results. In the multiple quantization results, a length of each quantization result is b, and b is an integer greater than or equal to 2.

Specifically, the second device may obtain the index value of each of the multiple quantization reference values in the following manner. The second device inputs the m-th phase quantization reference value among the multiple phase quantization reference values into a preset classification formula to obtain an index value of the m-th phase quantization reference value output by the preset classification formula. The index value may refer to an index value corresponding to the m-th phase quantization reference value in the phase quantization reference set. For example, the aforementioned preset classification formula may be represented as $f1\left(\overline{\overline{\varphi_T^m}}\right) = index_2$, *f1*(*) represents a calculation function of the preset classification formula, $\overline{\overline{\varphi_T^m}}$ represents the m-th phase quantization reference value, and $index_2$ represents an index value, which is an integer greater than or equal to 1 and less than or equal to K. Since the method for determining the index value of each phase quantization reference value is the same as the method for determining the index value of the m-th phase quantization reference value, details will not be described one by one.

The operation that the second device determines the multiple quantization results based on the index value of each of the multiple quantization reference values may include the following operations. The second device determines a quantization value corresponding to the index value of each of the multiple phase quantization reference values based on a quantization mapping relationship, and takes quantization values, each corresponding to an index value of a respective one of the multiple phase quantization reference values, as multiple quantization results. Alternatively, the second device inputs an index value of each of the multiple phase quantization reference values to an encoder, to obtain quantization values, each corresponding to a respective one of phase quantization reference values, output by the encoder respectively, and takes the quantization values, each corresponding to the index value of a respective one of the multiple phase quantization reference values, as multiple quantization results.

The quantization mapping relationship may include K candidate index values and a candidate quantization value corresponding to each of the K candidate index values, and the quantization mapping relationship may be preset according to an actual situation. The encoder may be a Goreme encoder, for example, which may be represented as $g\{index_2\}$, $g\{*\}$ represents a calculation function of the Goreme encoder. That is, in the method of processing by using an encoder, any one quantization value may be obtained by using a formula $g\left(f1\left(\overline{\overline{\varphi_T^m}}\right)\right)$.

The method for generating the key of the second device by the second device based on the multiple quantization results is the same as that in the above embodiment, and the description will not be repeated.

In some possible implementations, the last one of the second messages carries multiple quantization offsets. The processing of the second device further includes the following operation. The second device obtains the multiple quantization offsets based on the multiple quantization reference values and the multiple processed related parameters.

In some embodiments, the related parameter is the reception strength, and the processed related parameter is specifically the processed reception strength.

Taking any one of the multiple quantization offsets of the second device being the m-th quantization offset as an example, the method for determining the m-th quantization offset by the second device may include the following operation. The second device subtracts the m-th processed signal strength from the m-th quantization reference value to obtain the m-th quantization offset. In the present embodiment, the quantization reference value is specifically a strength quantization reference value, and the quantization offset is specifically a strength quantization offset. For example, the above processing may be represented by the following formula: $\{P_T^m\} = \left\{\overline{\overline{RSSI_T^m}}\right\} - \left\{\overline{RSSI_T^m}\right\}$. Here, $P_T^m$ represents the m-th strength quantization offset, $\overline{RSSI_T^m}$ represents the m-th processed signal strength among the multiple processed signal strengths, and $\overline{\overline{RSSI_T^m}}$ represents the m-th strength quantization reference value. By using the same processing manner as the m-th strength quantization offset, the second device may obtain multiple strength quantization offsets. The multiple strength quantization offsets may be represented in a set form, for example, the number of the multiple strength quantization offsets is M, and the set composed of the M strength quantization offsets is represented as $P_T$, then $P_T = \{P_T^1, \ldots \ldots, P_T^M\}$. Here, $P_T^1 \sim P_T^M$ represents M strength quantization offsets.

In some embodiments, the related parameter is the phase, and the processed related parameter is specifically the processed phase.

Taking any one of the multiple quantization offsets of the second device being the m-th quantization offset as an example, the method for determining the m-th quantization offset by the second device may include the following operation. The second device subtracts the m-th processed phase from the m-th quantization reference value to obtain the m-th quantization offset. In this embodiment, the quantization reference value is specifically a phase quantization reference value, and the quantization offset amount is specifically a phase quantization offset. For example, the above processing may be represented by the following formula: $\{P_T^m\} = \left\{\overline{\overline{\varphi_T^m}}\right\} - \left\{\overline{\varphi_T^m}\right\}$. Here, $P_T^m$ represents the m-th phase quantization offset, $\overline{\varphi_T^m}$ represents the m-th processed phase among the multiple processed phases, and $\overline{\overline{\varphi_T^m}}$ represents the m-th phase quantization reference value. By adopting the same processing manner as the m-th phase quantization offset, the second device may obtain multiple phase quantization offsets, which may be represented as a set form.

In some possible embodiments, taking the numbers of the multiple first messages and the multiple second messages both being M as an example, since the second device obtains the key after receiving the M first messages, the second device carries the key in the last one of the second message (i.e., the M-th second message). Specifically, the last one of the second message may carry a Message authentication code (MAC), and the MAC is generated based on the key of the second device.

Alternatively, the MAC is generated based on the key of the second device and multiple quantization offsets. The method for generating the MAC by the second device may specifically include the following operation. The second device processes the key of the second device and the multiple quantization offsets by using the MAC algorithm to obtain the MAC. For example, the above MAC may be represented as $MAC_T = f2(K_T, P_T)$. Here, $MAC_T$ is the last one of the second messages, $K_T$ represents the key of the second device, $P_T$ represents the set of M quantization offsets, and $f2$ () represents the MAC algorithm. The MAC algorithm may be a lightweight MAC algorithm, such as any one of a SPECK algorithm and a SIMON algorithm.

Alternatively, the MAC is generated based on the key of the second device, multiple quantization offsets, and a timestamp. The method for generating the MAC by the second device may specifically include the following operations. The second device processes the key of the second device, the multiple quantization offsets and the timestamp by using a MAC algorithm to obtain the MAC. The timestamp may be a time when the MAC is generated by the second device. For example, the aforementioned MAC may be represented as $MAC_T = f2(K_T, P_T, time_T)$. Here, the descriptions of $MAC_T$, $K_T$, $P_T$ and $f2$ () are the same with that in the aforementioned embodiments. The $time_T$ represents the timestamp, which may be the time when the MAC is generated by the second device.

In some possible embodiments, the operation that the first device generates the verification key of the second device based on the multiple second messages and the target model may include the following operations. The first device obtains multiple parameter estimation values based on the multiple second messages and the target model. Different estimation values among the multiple parameter estimation values are estimation values of related parameters of different first messages obtained by the second device. The first device determines the verification key of the second device based on the multiple parameter estimation values.

The operation that the first device obtains the multiple parameter estimation values based on the multiple second messages and the target model includes the following operations. The first device preprocesses a related parameter of each of the multiple second messages to obtain a preprocessed related parameter of each second message. The first device inputs the preprocessed related parameter of each second message into the target model to obtain the multiple parameter estimation values output by the target model.

The operation that the first device preprocesses the related parameter of each of the multiple second messages to obtain the preprocessed related parameter of each second message includes the following operations. The first device determines the first standard deviation and the first mean value based on the related parameter of each of the multiple second messages. The first device preprocesses the related parameter of each second message based on the first mean value and the first standard deviation, to obtain the preprocessed related parameter of each second message.

The last one of the second messages carries multiple quantization offsets, and different quantization offsets among the multiple quantization offsets are associated with the related parameters of different first messages obtained by the second device. The operation that the first device determines the verification key of the second device based on the multiple parameter estimation values includes the following operations. The first device obtains multiple quantization reference estimation values based on the multiple parameter estimation values and the multiple quantization offsets. The first device determines multiple quantization estimation results based on an index value of each of the multiple quantization reference estimation values. The first device obtains the verification key of the second device based on the multiple quantization estimation results.

The above related parameter is reception strength, or the above related parameter is phase. The related parameters used by the first device to generate the verification key of the second device should be of the same type as the related parameters used by the second device to generate the key. For example, if the second device generates the key based on the reception strengths of the first messages, then the first device generates the verification key based on the reception strengths of the second message, and if the second device generates the key based on the phases of the first messages, the first device needs to generate the verification key based on the phase of each second message.

In an embodiment, the above related parameter is specifically a reception strength. The related parameter of the first message is reception strength of the first message, and the related parameter of the second message is reception strength of the second message.

The operation that the first device determines the first standard deviation and the first mean value based on the related parameter of each of multiple second messages includes the following operation. The first device determines the first standard deviation and the first mean value based on the reception strength of each of the multiple second messages. The first standard deviation is specifically a reception strength standard deviation of the second messages, and the first mean value is specifically a mean value of the reception strengths of the second messages. The method for obtaining the reception strength of each second message by the first device is similar to the method for obtaining the reception strength of each first message by the second device described above, which will not be described in detail.

The operation that the first device preprocesses the related parameter of each second message based on the first mean value and the first standard deviation to obtain the preprocessed related parameter of each second message includes the following operation. The first device divides a difference between the reception strength of the m-th second message and the mean value of reception strengths of the second messages by the reception strength standard deviation of the second messages to obtain the preprocessed reception strength of the m-th second message. Since the processing method for each second message by the first device is the same as that for the m-th second message, details will not be described one by one. For example, it is assumed that the specific number of the multiple second messages is M, and the reception strength is represented by the RSSI. The RSSIs of the M second messages may form a set, which is represented

as $\{RSSI_R^m\} = \{RSSI_R^1, RSSI_R^2, ..., RSSI_R^M\}$ , R represents the first device, and $\{RSSI_T^m\}$ represents a set of RSSIs of respective second messages measured by the first device. It is assumed that the mean value of the reception strengths of the second messages is represented as $RSSI_R^{ave}$ , and the standard deviation of the reception strengths of the second messages is represented as $RSSI_R^{std}$ , then the first device may obtain the preprocessed reception strength of the m-th second message by using the following formula: $\{\widetilde{RSSI_R^m}\} = [\{RSSI_R^m\} - RSSI_R^{ave}]/\ RSSI_R^{std}$ .

$\widetilde{RSSI_R^m}$ is a set composed of processed related parameters of the respective second parameters, and any one processed related parameter of the second message in the set is the aforementioned processed reception strength of the m-th second message.

The operation that the first device inputs the preprocessed related parameter of each second message into the target model to obtain the multiple parameter estimation values output by the target model specifically includes the following operation. The first device inputs the preprocessed reception strength of each second message into the target model to obtain the multiple parameter estimation values output by the target model. Here, the multiple parameter estimation values may be specifically multiple reception strength estimation values, and different reception strength estimation values among the multiple reception strength estimation values are reception strength estimation values of different first messages obtained by the second device.

In the above embodiments, it has been explained that the last one of the second messages carries multiple quantization offsets, and different quantization offsets among the multiple quantization offsets are related to the reception strengths of different first messages obtained by the second device. The operation that the first device obtains the multiple quantization reference estimation values based on the multiple parameter estimation values and the multiple quantization offsets specifically includes the following operations. The first device adds the m-th reception strength estimation value and the m-th quantization offset to obtain the m-th estimation value. The first device determines, from the multiple candidate quantization estimation reference values included in the quantization reference estimation set, a candidate quantization estimation reference value with the minimum absolute value of the difference from the m-th estimation value as the m-th quantization reference estimation value. The m-th quantization reference estimation value is one of the multiple quantization reference estimation values. In the present embodiment, the quantization reference estimation value may be a strength quantization reference estimation value, the candidate quantization estimation reference value may be a candidate strength quantization estimation reference value, and the quantization reference estimation set may be a strength quantization reference estimation set.

The processing method for obtaining the m-th quantization reference estimation value by the first device may be represented by the following formula: $RS\acute{S}I_T^m = argmin_{q' \in Q'_K} \left| q' - (\widetilde{RSSI_T^m} + p_T^m) \right|$ . *argmin* represents calculating a value of a variable enabling the objective function being the minimum value, the variable is *q'*, the objective function is $\left| q' - (\widetilde{RSSI_T^m} + p_T^m) \right|$ , $\widetilde{RSSI_T^m}$ represents the m-th reception strength estimation value, $p_T^m$ represents the m-th quantization offset, $(\widetilde{RSSI_T^m} + p_T^m)$ represents obtaining the m-th estimation value by adding the m-th reception strength estimation value and the m-th quantization offset, $Q'_K$ represents the strength quantization reference estimation set, $q' \in Q'_K$ represents that the variable *q'* is one candidate strength quantization reference value in $Q'_K$ , and $RS\acute{S}I_T^m$ is the m-th strength quantization reference estimation value. The finally obtained multiple strength quantization reference estimation values may be represented in a set form, and since the method for determining each quantization reference estimation value is the same as the method for determining the m-th strength quantization reference estimation value, details will not be described one by one.

The strength quantization reference estimation set may include K candidate strength quantization estimation reference values. The K candidate strength quantization estimation reference values are arranged in an ascending order, and each candidate strength quantization estimation reference value has a corresponding index value in the strength quantization reference estimation set. In the K candidate strength quantization estimation reference values, the interval between any adjacent candidate strength quantization estimation reference values is the same, that is, the K candidate strength quantization estimation reference values are uniformly spaced. The strength quantization reference estimation set may be determined by the first device based on the multiple reception strength estimation values. The processing method for generating the strength quantization reference estimation set by the first device may include the following operations. The first device determines, from the multiple reception strength estimation values, a maximum reception strength estimation value and a minimum reception strength estimation value. K strength estimation value intervals are divided between the maximum reception strength estimation value and the minimum reception strength estimation value. An intermediate estimation value is selected in each of the K strength estimation value intervals, and the selected intermediate estimation value are considered to be K candidate strength quantization estimation reference values in the strength quantization reference estimation set. The differences between the maximum values and the minimum values in different strength estimation value intervals in the K strength estimation value intervals are the same.

The first device obtains the index value of each of the multiple quantization reference estimation values in the following manner. The first device inputs the m-th quantization reference estimation value among the multiple quantization reference estimation values into a preset classification formula to obtain an index value of the m-th quantization reference estimation value output by the preset classification formula. The index value of the m-th quantization reference estimation value may refer to an index value corresponding to the m-th quantization reference estimation value in the quantization reference estimation set. Since the method for determining the index value of each quantization reference estimation value is the same as the method for determining the index value of the m-th quantization reference estimation value, details will not be described one by one.

The operation that the first device determines the multiple quantization estimation results based on the index value of each of the multiple quantization reference estimation values may include the following operations. The first device determines a quantization value corresponding to the index value of each of the multiple quantization reference estimation values based on a quantization mapping relationship, and takes quantization values, each corresponding to the index value of a respective on of the multiple quantization reference estimation values, as multiple quantization estimation results. Alternatively, the first device inputs an index value of each of the multiple quantization reference estimation values into an encoder, to obtain quantization values, each corresponding to a respective one of quantization reference estimation values, output by the encoder respectively, and takes quantization values, each corresponding to the index value of a respective one of the multiple quantization reference estimation values, as multiple quantization estimation results. Here, the specific description of the quantization mapping relationship is similar to that of the above embodiment, and will not be repeatedly described. The description of the encoder is also similar to that of the above embodiment, and will not be repeatedly described. It should be understood that the first device and the second device obtain the quantization estimation results in the same manner, for example, the second device determines multiple quantization results by using the quantization mapping relationship, and accordingly, the first device also determines the multiple quantization estimation results by using the quantization mapping relationship. If the second device obtains multiple quantization results by using the encoder, and accordingly, the first device also obtains multiple quantization estimation results by using the encoder.

The operation that the first device obtains the verification key of the second device based on the multiple quantization reference estimation values may include the following operation. The first device combines the multiple quantization reference estimation values to obtain the verification key of the second device. Taking the number of the multiple quantization reference estimation values being M as an example, the length of each quantization reference estimation value is b, then the length of the verification key of the second device equals M multiplied by b. It is assumed that b = 4 and M = 32, then the length of the verification key of the second device and the length of the key of the second device should be the same, both of which are 128.

In an embodiment, the above related parameter is specifically the phase. The related parameter of the first message is the phase of the first message, and the related parameter of the second message is the phase of the second message.

The operation that the first device determines the first standard deviation and the first mean value based on the related parameter of each of the multiple second messages includes the following operation. The first device determines the first standard deviation and the first mean value based on a phase of each of the multiple second messages. The first standard deviation is specifically a standard deviation of phases of the second messages, and the first mean value is specifically a mean value of phases of the second messages.

The operation that the first device preprocesses the related parameter of each second message based on the first mean value and the first standard deviation to obtain the preprocessed related parameter of each second message includes the following operation. The first device divides a difference between the phase of the m-th second message and the mean value of phases of the second messages by the phase standard deviation of the second messages to obtain the preprocessed phase of the m-th second message. Since the processing method for each second message by the first device is the same as the processing method for the m-th second message, details will not be described one by one. For example, it is assumed that the specific number of the multiple second messages is M, the phases of the M second messages may form a set, which is represented as $\{\varphi_R^m\} = \{\varphi_R^1, \varphi_R^2, ..., \varphi_R^M\}$, R represents the first device, $\{\varphi_R^m\}$ represents a set of phases of the second messages obtained by the first device. It is assumed that the mean value of phases of the second messages is represented as $\varphi_R^{ave}$, and the phase standard deviation of the second messages is represented as $\varphi_R^{std}$, then the first device may obtain the preprocessed phase of the m-th second message by using the following formula: $\{\widehat{\varphi_R^m}\} = [\{\varphi_R^m\} - \varphi_R^{ave}]/\varphi_R^{std}$. Here, $\{\widehat{\varphi_R^m}\}$ is a set composed of the respective pre-processed phases of the second messages.

The operation that the first device inputs the preprocessed related parameter of each second message into the target model to obtain the multiple parameter estimation values output by the target model specifically includes the following operation. The first device inputs the preprocessed phase of each second message into the target model to obtain the multiple parameter estimation values output by the target model. Here, the multiple parameter estimation values may specifically be multiple phase estimation values, and different phase estimation values among the multiple phase estimation values are phase estimation values of different first messages obtained by the second device.

The last second message carries multiple quantization offsets, and different quantization offsets among the multiple quantization offsets are related to phases of different first messages obtained by the second device. The operation that the first device obtains the multiple quantization reference estimation values based on the multiple parameter estimation values and the multiple quantization offsets specifically includes the following operations. The first device adds the m-th phase estimation value and the m-th quantization offset to obtain the m-th estimation value. The first device determines, from the multiple candidate quantization estimate reference values included in the quantization reference estimation set, a candidate quantization estimate reference value with the minimum absolute value of the difference from the m-th estimation value as the m-th quantization reference estimation value. The m-th quantization reference estimation value is one of the multiple quantization reference estimation values, and m is a positive integer. In the present embodiment, the quantization reference estimation value may be a phase quantization reference estimation value, the candidate quantization estimation reference value may be a candidate phase quantization estimation reference value, and the quantization reference estimation set may be a phase quantization reference estimation set.

The first device may obtain the m-th quantization reference estimation value by using the following formula:

$$\acute{\varphi}_T^m = argmin_{q' \in Q_K'}\left|q' - \left(\widetilde{\varphi_T^m} + p_T^m\right)\right|$$, argmin represents calculating a value of a variable enabling the objective function being the minimum value, the variable is q', the objective function is $\left|q' - \left(\widetilde{\varphi_T^m} + p_T^m\right)\right|$, $\widetilde{\varphi_T^m}$ represents the m-th phase estimation value, $p_T^m$ represents the m-th quantization offset value, ( $\widetilde{\varphi_T^m} + p_T^m$ ) represents obtaining the m-th estimation value by adding the m-th phase estimation value and the m-th quantization offset, $Q_K'$ represents the phase quantization reference estimation set, $q' \in Q_K'$ represents that the variable q' is one candidate phase quantization reference value in $Q_K'$, and $\acute{\varphi}_T^m$ is the m-th phase quantization reference estimation value. The finally obtained multiple phase quantization reference estimation values may be represented in a set form. Since the method for determining each phase quantization reference estimation value is the same as the method for determining the m-th phase quantization reference estimation value, details will not be described one by one.

The method for generating the phase quantization reference estimation set is similar to the aforementioned embodiment, which may include the following operations. The first device determines, from the multiple phase estimation values, a maximum phase estimation value and a minimum phase estimation value. The first device divides K phase estimation value intervals between the maximum phase estimation value and the minimum phase estimation value, selects an intermediate estimation value in each of the K phase estimation value intervals and the selected intermediate estimation values are considered as K candidate phase quantization estimation reference values in the phase quantization reference estimation set. The differences between the maximum values and the minimum values of different phase estimation value intervals among the K phase estimation value intervals are the same. The method for obtaining an index value of each of the multiple quantization reference estimation values by the first device, the method for determining multiple quantization estimation results based on the index value of each of the multiple quantization reference estimation values by the first device, and the method for obtaining the verification key of the second device based on the multiple quantization reference estimation values by the first device are similar to the aforementioned embodiments, which will not be repeated here.

In another embodiment, the operation that first device obtains the multiple parameter estimation values based on the multiple second messages and the target model includes the following operations. The first device inputs the related parameter of each of the multiple second messages into the target model to obtain the multiple parameter estimation values output by the target model. The target model is used for preprocessing the related parameter of each second message to obtain the preprocessed related parameter of each second message. The first device obtains the multiple parameter estimation values based on the preprocessed related parameter of each second message.

In the present embodiment, the above related parameter may be the reception strength or the phase. The process after obtaining the multiple parameter estimation values to obtaining the verification key of the second device by the first device are the same as that in the aforementioned embodiments, and the descriptions thereof will not be repeated. The present embodiment is different from the aforementioned embodiments in that, in the present embodiment, the target model preprocesses the related parameter of each second message. The specific method for preprocessing the related parameter of each second message through the target model is the same as the method for preprocessing the related parameter of each second message by the first device, which will not be described repeatedly.

In some possible embodiments, the last one of the second messages carries a MAC. The MAC is generated based on the key of the second device. The authentication method of the first device includes the following operations. The first device generates information to be authenticated based on the verification key of the second device and the last one of the second messages. In a case that the information to be authenticated is consistent with the MAC, the first device determines that the verification key of the second device is consistent with the key of the second device.

Here, the operation that the first device generates information to be authenticated based on the verification key of the second device and the last one of the second messages specifically includes the following operation. The first device performs MAC calculation on the last one of the second messages based on the verification key of the second device to obtain information to be authenticated. As long as the methods of MAC calculation performed by the first device and the second device are the same, the methods of MAC calculation are included in the scope of protection of this embodiment. The specific processing of MAC calculation is not limited in the present embodiment.

In addition, the method further includes the following operation. In a case that the information to be authenticated is inconsistent with the MAC, it is determined that the verification key of the second device is inconsistent with the key of the second device. Further, the method includes the following operation. In a case that the first device determines that the verification key of the second device is inconsistent with the key of the second device, the processing ends. Alternatively, in a case that the first device determines that the verification key of the second device is inconsistent with the key of the second device, the first device re-sends multiple first messages to the second device to cause the second device to re-generate the key, which is not repeated here.

In some possible embodiments, the second device sends a corresponding second message when receiving each of the multiple first messages.

It is assumed that the number of first messages for generating the key is M, that is, the multiple first messages are specifically M first messages, and accordingly, the multiple second messages are specifically M second messages. The operation that the first device sends multiple first messages to the second device may include the following operation. The first device periodically sends M first messages to the second device within a coherent time. Accordingly, the second device receives the multiple first messages sent by the first device, and the second device generates the key of the second device based on the multiple first messages. The operation that the second device sends the multiple second messages to the first device specifically includes the following operation. In a case that the second device receives the m-th first message sent by the first device, the second device determines whether the currently received first message is the M-th first message, if not, modulates the m-th first message to obtain the m-th second message, and the second device sends the m-th second message to the first device. If yes, the second device generates the key of the second device based on the M first messages, modulates the M-th first message to obtain the M-th second message, and the second device sends the M-th second message to the first device. The content carried by the M-th second message is the same as that of the aforementioned embodiment, and the description thereof will not be repeated. The m-th first message is any one of the multiple first messages, and the m-th second message is one of the multiple second messages. The periodic period duration may be set according to the actual situation, and may be, for example, 1 millisecond, 0.5 millisecond, or longer or shorter, and will not be exhaustive here. The duration of the coherence time is not limited in this embodiment.

In some possible examples, in a case that the above related parameter is the reception strength, the above related parameter of the first message is the reception strength of the first message, and the above related parameter of the second message is the reception strength of the second message. The transmission power of each of the multiple first messages is a random transmission power.

Alternatively, the transmission power of each of the multiple first messages is a random transmission power. That is, the first device sends multiple first messages at random transmission power. Taking any one of the first messages as the a-th first message (a is an integer greater than or equal to 1 and less than or equal to M) as an example, the transmission power of the a-th first message is $0 \leq RSSI_{CW}^{a} \leq RSSI_{CW}^{max}$. $RSSI_{CW}^{a}$ represents the transmission power of the a-th first message, and $RSSI_{CW}^{max}$ represents the maximum transmission power.

Alternatively, transmission powers of different first messages among the multiple first messages are different.

In one case, the transmission power of each of the multiple first messages may be preset, and the transmission powers of different first messages may be different. For example, the multiple first messages are specifically M first messages, the first device is configured with M preset transmission powers in advance, and different preset transmission powers are different. The first device may select the a-th preset transmission power from the M preset transmission powers as the transmission power of the a-th first message when sending the a-th first message among the M first messages. The manner for presetting the M preset transmission powers is not limited in the present embodiment.

In yet another case, the transmission power of each first message in the multiple first messages is randomly selected by the first device from 0 to a maximum transmission power, and the transmission powers of different first messages among the multiple first messages are different. For example, the first device randomly selects a power value from 0 to a maximum transmission power, and if the power value is different from the transmission powers of all a-1 first messages that have been sent, the power value is used as the transmission power of the a-th first message. If the power value is the same as any one of the transmission powers of the a-1 first messages that have been sent, a power value is randomly reselected from 0 to the maximum transmission power until a power value different from the transmission powers of all the a-1 first messages that have been sent is selected.

In this example, different second messages among the multiple second messages are obtained by modulating different first messages by the second device based on reflection coefficient(s).

In one case, the reflection coefficients corresponding to different second messages are the same.

In this case, the multiple second messages may use the same reflection coefficient. The reflection coefficient may be preconfigured, and the method for presetting the reflection coefficient is not limited in this embodiment.

Alternatively, the reflection coefficient may be a candidate reflection coefficient at a corresponding position selected from a preset coefficient set based on the current number of times for generating the key, and the preset coefficient set may include multiple candidate reflection coefficients. For example, when the key is currently generated for the L-th time, the second device may select the L-th candidate reflection coefficient from the preset coefficient set as the reflection coefficient corresponding to each of the current multiple second messages, and L is a positive integer.

Alternatively, different first messages among the multiple first messages carry different reflection coefficient indication information, and the different reflection coefficient indication information is used for indicating reflection coefficient(s) corresponding to different second messages. The reflection coefficient indication information carried by the different first messages indicates that the different second messages correspond to the same reflection coefficient. Accordingly, in a case that the second device receives the m-th first message sent by the first device, the second device may determine the reflection coefficient corresponding to the m-th second message based on the reflection coefficient indication information carried by the m-th first message.

In another case, the reflection coefficient(s) corresponding to different second messages may be the same or different. In this case, the reflection coefficient(s) corresponding to each second message may be selected by the second device from a preset range. Specifically, when sending the m-th second message, the second device may randomly select a reflection coefficient from the preset range, and the preset range may be [0, 1).

In yet another case, reflection coefficients corresponding to different second messages among the multiple second messages are different.

The reflection coefficient corresponding to each second message may be selected by the second device from a preset coefficient set. Specifically, when sending the m-th second message, the second device may select the candidate reflection coefficient at the m-th position from the preset coefficient set as the reflection coefficient corresponding to the m-th second message. For example, the following formula may be used to represent the method for selecting the reflection coefficient corresponding to the m-th second message by the second device: $\xi(m) \in \{\xi_1, \xi_2, \dots, \xi_V\}$. $\xi(m)$ is the reflection coefficient corresponding to the m-th second message, and $\xi_1 - \xi_V$ represent V candidate reflection coefficients included in the preset coefficient set. The V candidate reflection coefficients are different from each other, and the V candidate reflection coefficients may be uniformly distributed in [0, 1).

Alternatively, the reflection coefficient corresponding to each second message may be randomly selected by the second device from a preset range. Specifically, when sending the m-th second message, the second device may randomly select a reflection coefficient from a preset range. If the reflection coefficient is different from the reflection coefficient corresponding to any one of the previous m-1 second messages, the reflection coefficient may be used as the reflection coefficient corresponding to the m-th second message, or otherwise, the reflection coefficient may be reselected from the preset range until a reflection coefficient different from the reflection coefficients of previous m-1 second messages is selected.

Alternatively, different first messages among the multiple first messages carry different reflection coefficient indication information, and the different reflection coefficient indication information is used to indicate reflection coefficients corresponding to different second messages. The reflection coefficients corresponding to different second messages are different. In a case that the second device receives the m-th first message sent by the first device, the second device may determine the reflection coefficient corresponding to the m-th second message based on the reflection coefficient indication information carried by the m-th first message. The present embodiment does not limit the method for determining the reflection coefficient corresponding to each second message by the first device.

Taking the number of first messages for generating the key being M as an example, the multiple second messages are specifically M second messages. The operation that in a case that the second device receives the m-th first message sent by the first device, the second device modulates the m-th first message to obtain the m-th second message specifically includes the following operations. In a case that the second device receives the m-th first message sent by the first device, the second device determines whether the m-th first message is the M-th first message, and if not, modulates, by adjusting an antenna impedance, the m-th first message with a reflection coefficient corresponding to the m-th second message to obtain the m-th second message. If yes, the second device modulates, by adjusting an antenna impedance, the M-th first message with a reflection coefficient corresponding to the M-th second message to obtain the M-th second message (i.e., the last one of the second messages). The specific description of the last second message is the same as that of the above embodiment, and the description thereof will not be repeated. In addition to the last one of the second messages, each of the first M - 1 second messages may carry a random number, or each of the first M - 1 second messages may carry a random number and a preamble. The length of the random number may be 16 bits, or may be longer or shorter, which is not limited in the present embodiment, and the method for generating the random number is not limited in the present embodiment. In addition, in the present example, the aforementioned MAC carried by the last one of the second messages may be generated based on the key of the second device and multiple quantization offsets, and the specific method for generating the MAC is the same as that of the aforementioned embodiments, and the description thereof will not be repeated.

In some possible examples, in a case that the above related parameter is a phase, the related parameter of the first message is a phase of the first message, and the related parameter of the second message is a phase of the second message. The phase of each of the multiple first messages is a random phase.

Alternatively, the phase of each of the multiple first messages is a random phase, and the random phase obeys a uniform distribution of $[0, 2\pi]$.

Alternatively, different first messages among the multiple first messages have different phases.

In one case, the phase of each of the multiple first messages may be preset, and the phases of different first messages may be different. For example, the multiple first messages are specifically M first messages, the first device is pre-configured with M preset phases, and different preset phases are different. The first device may select the a-th preset phase from the M preset phases as the phase of the a-th first message when sending the a-th first message among the M first messages.

In yet another case, the phase of each of the multiple first messages is randomly selected by the first device from $[0, 2\pi]$, and the phases of different first messages among the multiple first messages are different. Taking processing of the a-th first message as an example, the first device randomly selects a phase value from $[0, 2\pi]$, determines whether the phase value is the same as the phase of any one of the a-1 first messages sent before the a-th first message, and if the phase value is different from that of all the phases of the a-1 first messages that have been sent, the phase value is used as the phase of the a-th first message. Otherwise, the first device reselects until a phase different from the phases of the a-1 first messages that have been sent is selected.

In this example, different second messages among the multiple second messages carry different timestamps, and the phases of different second messages are related to the phases of the first messages.

For example, it is assumed that the m-th first message $s_{m0}(t)$ is represented as $s_{m0}(t) = A\cos(2\pi f_c t + \varphi_{m0} + \varphi_1)$. Here, $f_c$ is the carrier frequency, A is the amplitude, $\varphi_{m0}$ is the phase of the m-th first message, and $\varphi_1$ is the phase generated by the sending link of the first device. The second device modulates the m-th first message to obtain the m-th second message, and the m-th second message $s_{m2}(t)$ is specifically represented as $s_{m2}(t) = \alpha A\cos(2\pi f_c(t - \tau_{m0}) + \varphi_{m0} + \varphi_1 + \varphi_2)$. Here, $\alpha$ is a forward link attenuation coefficient, $\tau_{m0}$ represents a forward link consumption time, and $\varphi_2$ is a phase generated by a sending link of the second device. The m-th second message received by the first device may be represented as: $s_{m3}(t) = \alpha\beta A\cos(2\pi f_c(t - \tau_{m0} - \tau_1) + \varphi_{m0} + \varphi_1 + \varphi_2 + \varphi_3)$. Here, $\beta$ represents the backward link attenuation coefficient, $\tau_1$ represents the backward link consumption time, and $\varphi_3$ is the phase generated by the reception link of the first device. It may be seen that the phase of the m-th second message includes the phase of the m-th first message and the phases generated by the sending link and reception link of the second device. Since the phases generated by the sending link and the reception link of the second device may be considered to remain unchanged in an ideal environment, the phase of the m-th second message is mainly affected by the phase of the m-th first message. Therefore, the first device may divide any one of the second messages into two parts by I/Q demodulation, obtain the I/Q two basebands signals through frequency mixing and low-pass filtering, and parse out the phase.

Taking the number of first messages for generating the key being M as an example, the multiple second messages are specifically M second messages. The operation that in a case that the second device receives the m-th first message sent by the first device, the second device modulates the m-th first message to obtain the m-th second message specifically includes the following operations. In a case that the second device receives the m-th first message sent by the first device, the second device determines whether the m-th first message is the M-th first message. If not, modulates, by adjusting an antenna impedance, the m-th first message to obtain the m-th second message. If yes, the second device modulates, by adjusting an antenna impedance, the M-th first message to obtain the M-th second message. In addition to the last one of the second messages, each of the first M - 1 second messages may carry at least one of the following information: an antenna port, an Electronic Product Code (EPC), a phase, and a timestamp. Preferably, each of the first M-1 second messages carries at least an EPC and a timestamp. The timestamp may specifically be the time when the second device generates the second message (for example, it may be the time when the m-th second message is started to be generated), for example, the m-th second message may carry an EPC and the time when the m-th second message is generated. In addition, in the present example, the MAC carried by the last one of the second messages may be generated based on a key of the second device, multiple quantization offsets, and a time stamp. The specific method for generating the MAC is the same as that of the above embodiment, and the description thereof will not be repeated.

In some possible embodiments, before the first device sending the multiple first messages to the second device, the method further includes the following operation. The first device sends the fourth message to the second device. The fourth message carries the number of first messages for generating the key. Accordingly, before the second device receives the multiple first messages sent by the first device, the method further includes the following operation. The second device receives the fourth message sent by the first device. Here, the number of first messages for generating the key may be represented as M.

The aforementioned fourth message may be a Query command. In one possible example, the Query command may be referred to as a key generation request Query command. The fourth message may further carry a timing parameter, which may be a positive number. The timing parameter is used for the second device to determine a maximum value of a count value of a counter. The counter may be a slot counter. Accordingly, after the second device receives the fourth message sent by the first device, the method may further include: the second device may determine a maximum value of the count value of the counter based on the timing parameter in the fourth message, and takes the maximum value as an initial value of the count value of the counter. Exemplarily, the timing parameter may be equal to 1, that is, the second device determines that the maximum value of the count value of the counter is equal to 1. The processing of the second device may further include the following operation. In a case that the second device receives the first one of the multiple first messages, decreases the count value of the counter to 0. Any one of the aforementioned multiple first messages may be a QueryAdjust message, which may be referred to as a QueryAdjust packet. Each of the multiple first messages may carry indication information for instructing the second device to decrease the count value of the counter to 0.

In some possible embodiments, in a case that the second device receives the acknowledgement message sent by the first device, after determining that the key verification of the second device is passed, the method may further include the following operation. The second device sends the fifth message to the first device. The fifth message is a response message of the acknowledgement message, and the fifth message carries target designation information encrypted by the key of the second device. The target designation information includes at least an EPC of the second device. The length of the fifth message may be 135 bits, or may be longer or shorter, which is not limited herein. The target designation information may include other contents in addition to the EPC of the second device, which is not exhaustive here.

After the second device sends the fifth message to the first device, the second device enters an Access stage, and then further enters an Acknowledge stage. Accordingly, after the first device sends the acknowledgement message to the second device, the method may further include the following operation. In a case that the first device receives the fifth message, the first device enters the Access stage, and then further enters the Acknowledge stage. The present embodiment is not limited to the specific processing of the Access stage and the Acknowledge stage.

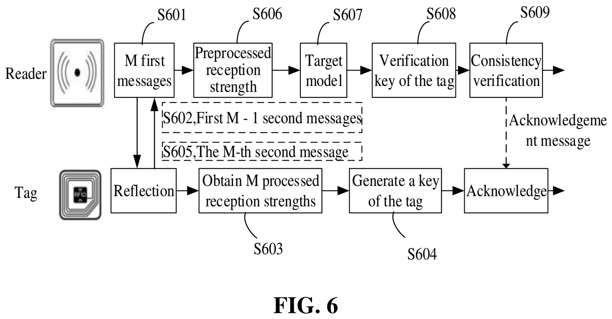

Referring to FIG. 6, the above method for generating the key is exemplarily described by taking the related parameter being the reception strength, both the number of the multiple first messages and the number of the multiple second messages being M, the first device being the reader, and the second device being the tag as examples. The method includes the following operations S601-S609. In operation S601, the reader sends M first messages to the tag. In operation S602, the tag reflects the first M - 1 second messages to the reader. In operation S603, in a case that the tag receives the M-th first message, the tag performs processing based on the reception strength of each of the M first messages to obtain M processed reception strengths. In operation S604, the tag obtains multiple quantization reference values based on M processed reception strengths, and performs quantization based on the multiple quantization reference values to generate a key of the tag. In operation S605, the tag sends the M-th second message (i.e., the last one of the second messages) to the reader. In operation S606, the reader preprocesses the reception strength of each of the M second messages to obtain the preprocessed reception strength of each second message. In operation S607, the reader inputs the preprocessed reception strength of each second message into a target model to obtain multiple parameter estimation values output by the target model. In operation S608, the reader performs quantization based on the multiple parameter estimation values to determine a verification key of the tag. In operation S609, the reader performs consistency verification on the verification key of the tag and the key of the tag, and sends an acknowledgement message to the tag in a case of determining that the verification key of the tag and the key of the tag are consistent.

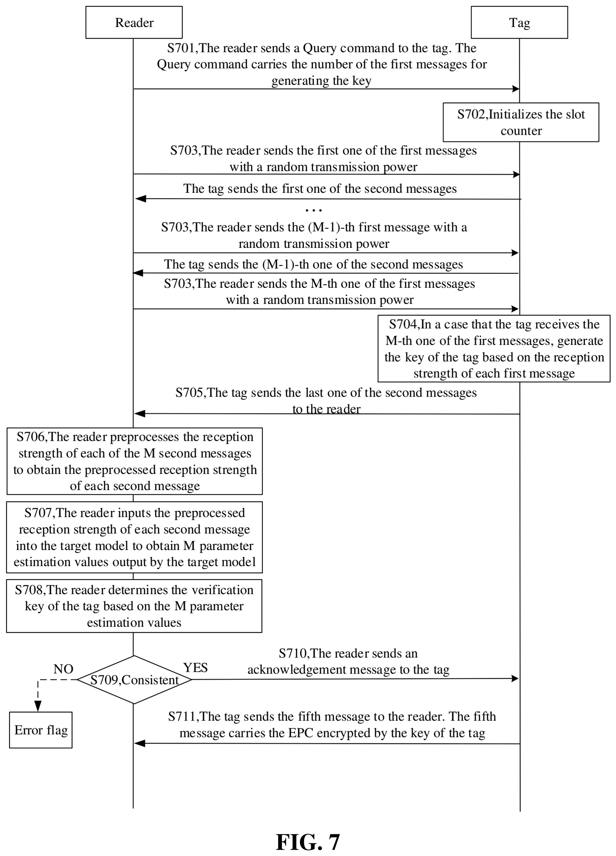

Referring to FIG. 7, another exemplary description of the above method for generating the key is made by taking the related parameter being the reception strength (specifically, which is RSSI), both the number of the multiple first messages and the number of the multiple second messages being M, the first device being the reader, and the second device being the tag as examples.

In operation S701, the reader sends a Query command to the tag. The Query command carries the number of the first messages for generating the key. The Query command may further carry a timing parameter. The Query command is specifically the fourth message in the aforementioned embodiments, and detailed description thereof will not be described in detail.

In operation S702, the tag receives the Query command sent by the reader, and initializes the slot counter. The initialization of the slot counter may be setting the maximum value of the slot counter to 1. The specific processing of the tag is the same as that of the aforementioned embodiment, and the description thereof will not be repeated.

In operation S703, the reader sends M first messages with random transmission powers. In FIG. 7, in order to illustrate that the reader sends M first messages with the random transmission powers, the operation S703 is represented as that the reader sends the first one of the first messages with a random transmission power...the reader sends the (M-1)-th one of the first messages with a random transmission power, and the reader sends the M-th first message with a random transmission power. Each of the M first messages may specifically be a QueryAdjust command. Accordingly, in a case that the tag receives each of the first M-1 first messages, the tag modulates, by adjusting the antenna impedance, each first message sent by the reader with the reflection coefficient$\xi(m)$, and backscatters each second message. In FIG. 7, in order to illustrate that the tag respectively sends the first M-1 second messages, it is illustrated that the tag sends the first one of the second messages... the tag sends the (M-1)-th one of the second messages.

In operation S704, in a case that the tag receives the M-th one of the first messages, the tag generates the key of the tag based on the reception strength of each first message. Here, the specific processing for generating the key by the tag has been described in detail in the above embodiment, and the description thereof will not be repeated.

In operation S705, the tag sends the last one of the second messages to the reader. The last one of the second messages may be specifically the M-th second message. The last one of the second messages may carry a MAC, and the MAC may be generated based on the key of the tag and multiple quantization offsets. The specific method for generating the MAC is the same as that of the aforementioned embodiments, and the description thereof will not be repeated.

In operation S706, the reader preprocesses the reception strength of each of the M second messages to obtain the preprocessed reception strength of each second message.

In operation S707, the reader inputs the preprocessed reception strength of each second message into the target model to obtain M parameter estimation values output by the target model.

In operation S708, the reader determines the verification key of the tag based on the M parameter estimation values.

In operation S709, the reader determines whether the verification key of the tag is consistent with the key of the tag. If yes, the reader performs the operation S710. If no, an Error flag is sent, and the processing ends. After the Error flag is sent, no further processing may be performed, or the processing may return to the operation S701 again.

In operation S710, the reader sends an acknowledgement message to the tag. The acknowledgement message is used to indicate that the authentication for the key of the tag is passed.

In operation S711, the tag sends the fifth message to the reader. The fifth message carries the EPC encrypted by the key of the tag.

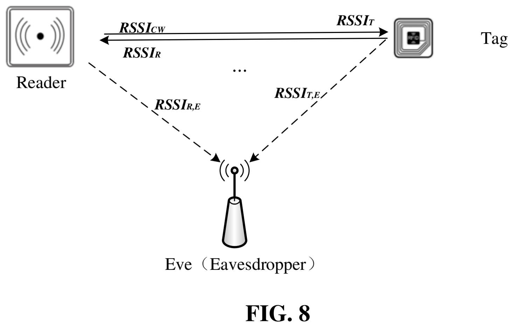

Further in combination with the scenario diagram illustrated in FIG. 8, the transmission power at which the reader sends any one first message is represented as $RSSI_{CW}$ in FIG. 8. In FIG. 8, the reception strength at which the Tag receives the first message is represented as $RSSI_T$. The Tag sends multiple second messages to the reader. The reception strength at which the Reader side receives any one second message sent by the Tag is represented as $RSSI_R$ in FIG. 8. Although the eavesdropper (Eve) may monitor the strength (for example, which is represented as $RSSI_{R,E}$ in FIG. 8) of any one of the first messages and the strength (for example, which is represented as $RSSI_{T,E}$ in FIG. 8) of any one of the second messages sent by the tag, since the eavesdropper does not have channel reciprocity between respective tags and the reader, and the eavesdropper does not have a preset target model, the eavesdropper cannot accurately estimate the reception strength of the tag, and thus cannot obtain the key of the tag. It can be seen that the security between the reader and the key of the tag can be guaranteed by adopting the solution provided by the present embodiment.

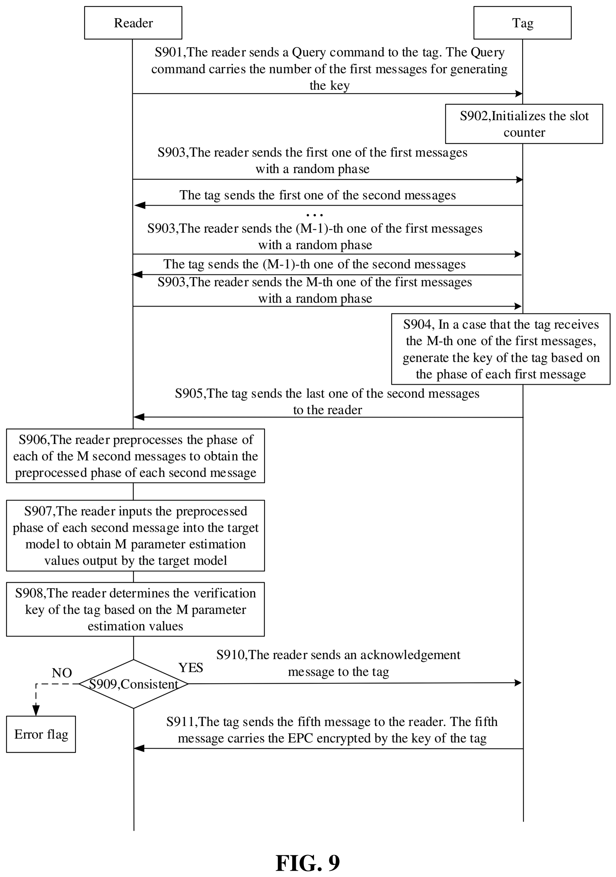

Referring to FIG. 9, another exemplary description of the above method for generating the key is made by taking the related parameter being the phase, both the number of the multiple first messages and the number of the multiple second messages being M, the first device being the reader, and the second device being the tag as examples.

In operation S901, the reader sends a Query command to the tag. The Query command carries the number of the first messages for generating the key.

In operation S902, the tag receives the Query command sent by the reader, and initializes the slot counter.

The operations S901 to S902 are the same as the operations S701 to S702, and the description thereof will not be repeated.

In operation S903, the reader sends M first messages with random phases. In FIG. 9, in order to illustrate that the reader sends M first messages with the random phases, the operation S903 is represented as that the reader sends the first one of the first messages with a random phase... the reader sends the (M-1)-th one of the first messages with a random phase, and the reader sends the M-th one of the first messages with a random phase. Each of the M first messages may specifically be a QueryAdjust command. Accordingly, in a case that the tag receives each of the first M-1 first messages, the tag modulates, by adjusting the antenna impedance, each first message sent by the reader, and backscatters each second message. In FIG. 9, in order to illustrate that the tag respectively sends the first M-1 second messages, it is illustrated that the tag sends the first one of the second messages...the tag sends the (M-1)-th one of the second messages. Each of the above M - 1 second messages may carry a timestamp and an EPC.

In operation S904, in a case that the tag receives the M-th first message, the tag generates the key of the tag based on the phase of each first message. Here, the specific processing for generating the key by the tag has been described in detail in the aforementioned embodiments, and the description thereof will not be repeated.

In operation S905, the tag sends the last one of the second messages to the reader. The last one of the second messages may be specifically the M-th second message. The last one of the second messages may carry a MAC, and the MAC may be generated based on the key of the tag, multiple quantization offsets and a timestamp. The specific method for generating the MAC is the same as that of the aforementioned embodiments, and the description thereof will not be repeated.

In operation S906, the reader preprocesses the phase of each of the M second messages to obtain the preprocessed phase of each second message.

In operation S907, the reader inputs the preprocessed phase of each second message into the target model to obtain M parameter estimation values output by the target model.

In operation S908, the reader determines the verification key of the tag based on the M parameter estimation values.

In operation S909, the reader determines whether the verification key of the tag is consistent with the key of the tag. If yes, the reader performs the operation S910. If no, an Error flag is sent, and the processing ends. After the Error flag is sent, no further processing may be performed, or the processing may return to the operation S901 again.

In operation S910, the reader sends an acknowledgement message to the tag. The acknowledgement message is used to indicate that the authentication for the key of the tag is passed.

In operation S911, the tag sends the fifth message to the reader. The fifth message carries the EPC encrypted by the key of the tag.

In some possible implementations, the above target model may be saved in the first device after being trained by other device. Alternatively, the above target model may be trained by the first device.

Here, the target model may be a trained model, and the target model may be referred to as a target neural network. The type of the target neural network may be specifically a supervised deep neural network, for example, any one of a fully connected network, a Recurrent Neural Network (RNN), a Long Short-Term Memory (LSTM), and the like, and all possible types are not exhaustive here.

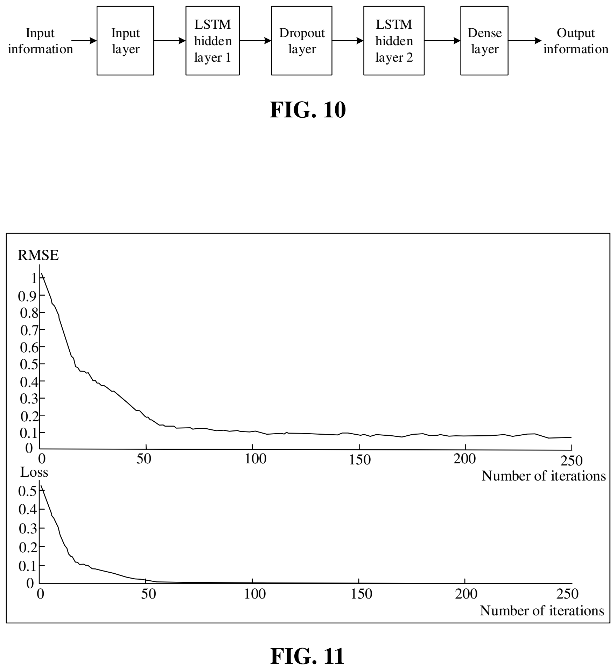

Taking LTSM as an example, in the LSTM, a unit state is added on the basis of RNN to store the long-term state. The training process of the LSTM model uses a back-propagation through time (BPTT) algorithm similar to the principle of the classical Back Propagation (BP) algorithm. The training process of the LSTM may include: calculating the output value of LSTM cells, calculating in reverse the error term of each LSTM cell, calculating the gradient of each weight according to the corresponding error term, and updating the weights based an optimization algorithm of gradients. Referring to FIG. 10, multiple layers included in the LSTM and the flow directions of input information and output information will be described. The input information firstly enters the input layer, the information is sent to the LSTM hidden layer 1 through the input layer, the data output by the LSTM hidden layer 1 enters the Dropout layer, the processed data is input to the LSTM hidden layer 2 through the Dropout layer for processing, the processed data is input to the Dense layer by the LSTM hidden layer 2, and the output information is obtained by the Dense layer. The Dropout layer is used to prevent overfitting. The Dense layer is also an output layer, and is used to implement a regression process of extracting feature information. In this embodiment, the feature information extracted by the Dense layer may be a reception strength or a phase. The number of neurons in the LSTM hidden layer 1 and the LSTM hidden layer 2 may be 128.

In some possible embodiments, the aforementioned target model is obtained by training by the first device. As long as the time when the target model is obtained by training by the first device is earlier than the time when the first device sends multiple first messages to the second device, the time when the target model is obtained by training by the first device is within the protection scope of the present embodiment. The processing of the first device may include the following operation. The first device trains a preset model based on training data to obtain the target model. The training data is related to the following parameters: a related parameter of each of the multiple third messages sent by the first device obtained by the second device, and a related parameter of each of the multiple reflection messages sent by the second device obtained by the first device. Different reflection messages among the multiple reflection messages are related to different third messages.

In one example, the above related parameter is the reception strength. The related parameter of the third message is the reception strength of the third message, and the related parameter of the reflection message is the reception strength of the reflection message.

The above training data may include the reception strength of each of multiple third messages sent by the first device obtained by the second device, and the reception strength of each of multiple reflection messages sent by the second device obtained by the first device.

The method for acquiring the training data may include the following operations. The first device sends multiple third messages to the second device. The first device receives multiple reflection messages sent by the second device. Different reflection messages among the multiple reflection messages correspond to different third messages, and each reflection message carries a reception strength of the third message corresponding to the reflection message. The first device obtains a reception strength of each of the multiple reflection messages by measuring, and obtains, from each reflection message, the reception strength of each third message measured by the second device. The first device takes, as the training data, the reception strength of each of multiple third messages sent by the first device and obtained by the second device and the reception strength of each of multiple reflection messages sent by the second device and obtained by the first device. Accordingly, the processing of the second device may include the following operations. The second device receives multiple third messages sent by the first device, and obtains a reception strength of each third message by measuring. The second device sends multiple reflection messages to the first device. Different reflection messages among the multiple reflection messages are obtained by reflecting different second messages by the second device by adjusting the antenna impedance, and each reflection message carries the reception strength of the third message corresponding to the reflection message.

The operation that the first device trains the preset model based on the training data to obtain the target model may include the following operation. The first device obtains the trained target model by taking the reception strength of each third message and the reception strength of each reflection message as the training data of the preset model. The loss function of the preset model is defined as the mean square error (MSE) function, which may be represented as:

$$MSE = \frac{\sum_{i=1}^{N}\left(\widetilde{RSSI_T^i} - RSSI_T^i\right)}{N}$$ . Herein, N represents the batch data size, $\widetilde{RSSI_T^i}$ represents the predicted i-th strength estimation value, and $RSSI_T^i$ represents the actually measured reception strength of the i-th third message. In each time of training, the loss function MSE is minimized by using the algorithm.

It should also be noted that before the first device sends the multiple third messages to the second device, the method may further include the following operation. The first device sends the first command to the second device. The first command carries the number D of third messages, and D is an integer greater than or equal to 2. The first command may further carry a timing parameter, and the timing parameter is used for the second device to set the count value of the slot counter to 1. Accordingly, after receiving the first command, the second device may set the count value of its own slot counter to 1. In addition, each third message may further be used to instruct the second device to set the count value of the slot counter to 0.

Taking the first device being the reader and the second device being the tag as examples, an exemplary description of the above method for training the model is made. The reader sends the first command to the tag. The tag receives the first command, and initializes the slot counter, that is, selects slot 1 to load into the slot counter. The reader sends D third messages within the coherence time. Every time a third message is received, the tag measures the reception strength of the third message and sends a reflection message of the third message. The reflection message carries the reception strength of the third message. The reader measures the reception strength of each of the D reflection messages, takes the reception strength of each reflection message and the reception strength of each third message as training data to train the preset model to obtain the trained target model. Specifically, the reception strength may be the RSSI.

Taking the first device being the reader and the second device being the tag as examples, another exemplary description of the above method for training the model is made. The processing of the tag in this example is the same as the aforementioned example, and the description thereof will not be repeated. The difference from the aforementioned example is that the reader measures the reception strength of each of the D reflection messages, preprocesses the reception strength of each reflection message, and obtains the preprocessed reception strength of each reflection message, and the reader takes the preprocessed reception strength of each reflection message and the reception strength of each third message as training data to train the preset model. The above method for preprocessing the reception strength of the reflection message is the same as the method for preprocessing the reception strength of each second message in the aforementioned embodiment, and the description thereof will not be repeated.

In one example, the aforementioned related parameter is the phase. The related parameter of the third message is the phase of the third message, and the related parameter of the reflection message is the phase of the reflection message.

The aforementioned training data may include a phase of each of multiple third messages sent by the first device and obtained by the second device, and a phase of each of multiple reflection messages sent by the second device and obtained by the first device.

In this example, the method for obtaining the training data by the first device is similar to the above example. The difference from the above example is that the training data includes the phase of each reflection message and the phase of each third message measured by the second device. The loss function used in this example is similar to that of the above example. The difference from the above example is that the loss function is calculated for the predicted phase and the phase of the third message actually measured by the second device. For example, the loss function in this example may be represented as: MSE' , and the calculation method of MSE' may be $MSE' = \frac{\sum_{i=1}^{N}(\widetilde{\varphi_T^i} - \varphi_T^i)}{N}$ . Herein, N represents the batch data size, $\widetilde{\varphi_T^i}$ represents the predicted i-th phase estimation value, and $\varphi_T^i$ represents the phase of the i-th one of the third messages actually measured by the second device. In each time of training, the loss function MSE' is minimized by using the algorithm.

Taking the first device being the reader and the second device being the tag as examples, an exemplary description of the above method for training the model is made. The processing flow of the present example is the same as that of the above example. The difference from the above example is that the reflection message carries the phase of the third message measured by the tag, the timestamp and the EPC, and the reader needs to measure the phase of each of the D reflection messages, and takes the phase of each reflection message and the phase of the third message carried in each reflection message as training data.

Next, in combination with the simulation results, taking the first device being the reader and the second device being the tag as examples, the method for generating the key provided in the present embodiments is described.

It is assumed that the length of the result of quantification for each first message by the tag (or for each second message by the reader) is b, b is equal to 4, the length of the key to be quantized is 128 bits, the distance between the reader and the tag is 1 meter, the antenna gain of the reader is 3dB, the antenna gain of the tag is 2dB, and the backscattering loss of the tag is 5dB, and the range of random transmission powers of the reader is 23dBm to 30dBm. It is assumed that the target model is LSTM, the maximum number of iterations for training is 250, and the optimization algorithm for training is Adaptive Moment Estimation (Adam). As can be seen from FIG. 11, when the number of iterations for training reaches more than 100, the Root mean squared error (RMSE) is close to or less than 0.1, and the loss is close to zero, so LSTM converges faster and has better fitting performance.

In the actual simulation, the estimation value of the reception strength (specifically, RSSI) of the tag obtained by the reader using other solution and the estimation value of the RSSI of the tag obtained by the reader using the solution provided in the present embodiments are respectively compared with the reception strength actually measured by the tag. It can be obtained that the reception strength actually measured by the tag is approximately the same as the estimation value of the RSSI of the tag obtained by the reader using the solution provided in the present embodiments, and there is a significant difference between the estimation value of the RSSI of the tag obtained by the reader using other solution and reception strength actually measured by the tag, which represents that the solution provided in the present embodiments can eliminate the influence of inconsistent sequences at two ends of the channel caused by system noise, estimation errors, and the like, thereby achieving the channel reciprocity required for generating the physical layer key.

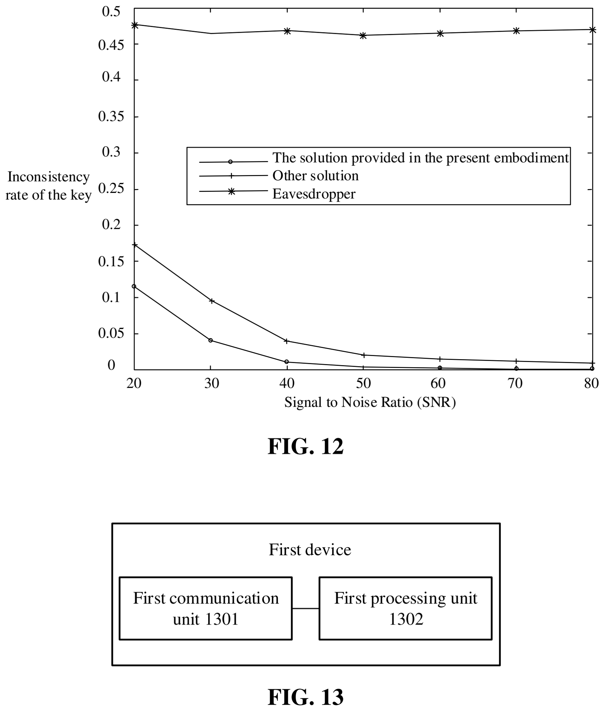

The inconsistency rate of the key is defined as the ratio of the number of different bits in both-side keys to the total number of bits extracted in the quantization stage. FIG. 12 illustrates the relationship between the key bit error rate and the Signal to Noise Ratio (SNR) under different solutions. When the SNR is 50 dB, the inconsistency rate of both-side keys in the solution provided in the present embodiments is lower than 0.01. That is, the consistency rate of both-side keys can reach more than 99.6%. The inconsistency rate of keys for the eavesdropper is about 0.47, which represents that the eavesdropper can hardly get any key information. Although the inconsistency rate of both-side keys obtained by using other solution is also lower than 0.05, it is significantly higher than the inconsistency rate of both-side keys obtained by the solution provided in present embodiment. It can be seen that the solution provided in the present embodiments is significantly superior to the conventional channel estimation solution.

Finally, still taking the first device being the reader, the second device being the tag, and the related parameter being the reception strength as examples, the beneficial effects of the solution provided in the present embodiments are analyzed. The reader transmits continuous carriers with random powers, and the eavesdropper does not know the transmission powers, so the source entropy for generating the key is enhanced. Because of the short-term reciprocity of the channel and the multi-level quantization solution based on negotiation is adopted, the reader and tag can obtain a consistent key pair, while the eavesdropper cannot obtain the key because of different channel. In addition, in the solution provided in the present embodiments, since the reader uses the target model to estimate, the influence of inconsistent sequences at two ends of the channel caused by actual system noise, error, and the like is eliminated, the consistency of generated keys is improved, and the robustness problem of generated keys is solved. Further, in the solution provided in the present embodiments, a multi-level quantization method is used, and deviations can be corrected by using the quantization offsets sent by the tag on the common channel, thereby reducing the number of negotiations for the key and reducing signaling overhead. Finally, in the solution provided in the present embodiments, only calculations such as measurement and quantization of the strengths of received signals need to be completed by the tag, and work with a large amount of calculation such as deep learning is performed by the reader, so it is suitable for the zero-power device.

In the solutions provided by the present embodiments, the first device sends multiple first messages, the multiple first messages are used for the second device to generate a key, the first device receives multiple second messages sent by the second device, and a last one of the multiple second messages carries the key of the second device. The first device generates a verification key based on the multiple second messages and the target model, and sends an acknowledgement message in a case of determining that the verification key is consistent with the key. In this way, since the key of the second device is generated according to the multiple first messages, and the verification key obtained by the first device is generated according to the multiple second messages, the randomness for generating the key can be guaranteed and then the security of the key can be guaranteed. In addition, since the verification key is generated by the first device according to the multiple second messages and the target model, the efficiency for generating the verification key by the first device can be guaranteed. Due to the short-term reciprocity of channel between the first device and the second device, the consistency of the verification key obtained by the first device and the key obtained by the second device can also be ensured.

FIG. 13 is a schematic diagram of a composition and structure of the first device according to an embodiment of the present disclosure. The first device includes the first communication unit 1301 and the first processing unit.

The first communication unit 1301 is configured to send multiple first messages to the second device and receive multiple second messages sent by the second device. Different first messages among the multiple first messages occupy different time domain ranges, and the multiple first messages are used for the second device to generate the key. Different second messages among the multiple second messages are related to different first messages, and a last one of the multiple second messages carries the key of the second device.

The first processing unit 1302 is configured to generate a verification key of the second device based on the multiple second messages and a target model, send an acknowledgement message to the second device through the first communication unit in a case that the verification key of the second device is consistent with the key of the second device.

The first processing unit is configured to obtain multiple parameter estimation values based on the multiple second messages and the target model, and determine the verification key of the second device based on the multiple parameter estimation values. Different parameter estimation values among the multiple parameter estimation values are estimation values of related parameters of different first messages obtained by the second device.

The first processing unit is configured to preprocess a related parameter of each of the multiple second messages to obtain a preprocessed related parameter of each second message, and input the preprocessed related parameter of each second message into the target model to obtain the multiple parameter estimation values output by the target model.

The first processing unit is configured to determine the first standard deviation and the first mean value based on the related parameter of each of the multiple second messages, and preprocess the related parameter of each second message based on the first mean value and the first standard deviation, to obtain the preprocessed related parameter of each second message.

The first processing unit is configured to input a related parameter of each of the multiple second messages into the target model to obtain the multiple parameter estimation values output by the target model. The target model is used to preprocess the related parameter of each second message to obtain a preprocessed related parameter of each second message, and the multiple parameter estimation values are obtained based on the preprocessed related parameter of each second message.

The last second message carries multiple quantization offsets, and different quantization offsets among the multiple quantization offsets are associated with the related parameters of different first messages obtained by the second device. The first processing unit is configured to obtain multiple quantization reference estimation values based on the multiple parameter estimation values and the multiple quantization offsets, determine multiple quantization estimation results based on an index value of each of the multiple quantization reference estimation values, and obtain the verification key of the second device based on the multiple quantization estimation results.

The first processing unit is configured to train a preset model based on training data, to obtain the target model. The training data is related to following parameters: a related parameter of each of multiple third messages sent by the first device and obtained by the second device, and a related parameter of each of multiple reflection messages sent by the second device and obtained by the first device. Different reflection messages among the multiple reflection messages are related to different third messages.

The related parameter includes reception strength. The related parameter includes phase.

A transmission power of each of the multiple first messages is a random transmission power.

Different second messages among the multiple second messages are obtained by modulating different first messages by the second device based on reflection coefficient(s).

Different second messages among the multiple second messages correspond to different reflection coefficients.

Different first messages among the multiple first messages carry different reflection coefficient indication information, and the different reflection coefficient indication information is used to indicate reflection coefficient(s) corresponding to different second messages.

A phase of each of the multiple first messages is a random phase.

Different second messages among the multiple second messages carry different timestamps, and the phases of different second messages are related to phases of the first messages.

The last second message carries a Message Authentication code (MAC), and the MAC is generated based on the key of the second device. The first processing unit is configured to generate information to be authenticated based on the verification key of the second device and the last second message, and determine that the verification key of the second device is consistent with the key of the second device in a case that the information to be authenticated is consistent with the MAC.

The first communication unit is configured to send the fourth message to the second device. The fourth message carries the number of the first messages for generating the key.

The first device is the first terminal or the first network device. The second device is a zero-power device.

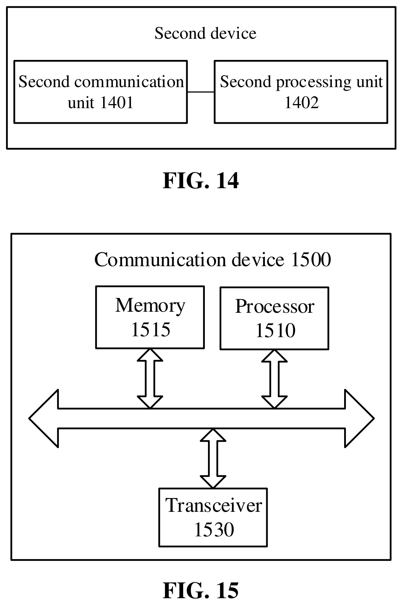

FIG. 14 is a schematic diagram of a composition and structure of the second device according to an embodiment of the present disclosure. The first device includes the second communication unit 1401 and the second processing unit 1402.

The second communication unit 1401 is configured to receive multiple first messages sent by the first device, and send multiple second messages to the first device. Different first messages among the multiple first messages occupy different time domain ranges, different second messages among the multiple second messages are related to different first messages, and a last one of the multiple second messages carries a key of the second device.

The second processing unit 1402 is configured to generate the key of the second device based on the multiple first messages, and determine that a key verification of the second device is passed in a case that an acknowledgement message sent by the first device is received through the second communication unit.

The second processing unit is configured to obtain the second mean value and the second standard deviation based on a related parameter of each of the multiple first messages, obtain multiple processed related parameters based on the second mean value, the second standard deviation, and related parameter of each first message, obtain multiple quantization reference values based on the multiple processed related parameters, and generate the key of the second device based on the multiple quantization reference values.

The second processing unit is configured to determine, based on multiple candidate quantization reference values, a candidate quantization reference value with a minimum difference from an m-th processed related parameter to be an m-th quantization reference value. The multiple candidate quantization reference values are determined based on the related parameter of each first message, the m-th processed related parameter is one of the multiple processed related parameters, the m-th quantization reference value is one of the multiple quantization reference values, and m is a positive integer.

The second processing unit is configured to determine multiple quantization results based on an index value of each of the multiple quantization reference values, and generate the key of the second device based on the multiple quantization results.

The last second message carries multiple quantization offsets. The second processing unit is configured to obtain the multiple quantization offsets based on the multiple quantization reference values and the multiple processed related parameters.

The related parameter is reception strength. The related parameter is a phase.

A transmission power of each of the multiple first messages is a random transmission power.

Different second messages among the multiple second messages are obtained by modulating different first messages by the second device based on reflection coefficient(s).

Different second messages among the multiple second messages correspond to different reflection coefficients.

Different first messages among the multiple first messages carry different pieces of reflection coefficient indication information, and the different pieces of reflection coefficient indication information are used to indicate reflection coefficient(s) corresponding to different second messages.

A phase of each of the multiple first messages is a random phase.

Different second messages among the multiple second messages carry different timestamps, and phases of different second messages are related to phases of the first messages.

The last second message carries a MAC, and the MAC is generated based on the key of the second device.

The second communication unit is configured to receive the fourth message sent by the first device. The fourth message carries the number of the first messages for generating the key.

The first device is the first terminal or the first network device. The second device is a zero-power device.

The first device and the second device according to the embodiments of the present disclosure can realize the corresponding functions of the first device and the second device in the above embodiments of the method for generating the key. For the processes, functions, implementation methods, and beneficial effects corresponding to respective modules (sub-modules, units, components, etc.) in the first device and the second device, the reference is made to the corresponding description in the above method embodiments, and the description thereof will not be repeated. It should be noted that the functions described with respect to respective modules (sub-modules, units, components, etc.) in the first device and the second device of the embodiments of the present disclosure may be implemented by different modules (sub-modules, units, components, etc.), or may be implemented by the same module (sub-module, unit, component, etc.).

FIG. 15 is a schematic structural diagram of a communication device 1500 according to an embodiment of the present disclosure. The communication device 1500 includes a processor 1510. The processor is configured to invoke and execute a computer program from a memory to cause the communication device 1500 to implement the method in the embodiments of the present disclosure. In one possible implementation, the communication device 1500 may further include a memory 1520. The processor 1510 may invoke and execute a computer program from the memory 1520 to cause the communication device 1500 to implement the method in the embodiments of the present disclosure. The memory 1520 may be a separate device independent of the processor 1510 or may be integrated in the processor 1510. In one possible implementation, the communication device 1500 may further include a transceiver 1530. The processor 1510 may control the transceiver 1530 to communicate with other devices, specifically, to send information or data to or receive information or data sent by other devices. Here, the transceiver 1530 may include a transmitter and a receiver. The transceiver 1530 may further include antennas, and the number of antennas may be one or more. In one possible implementation, the communication device 1500 may be the first device in the embodiments of the present disclosure, and the communication device 1500 may implement the corresponding processes implemented by the first device in respective methods of the embodiments of the present disclosure, and the description thereof will not be repeated here for the sake of simplicity. In one possible implementation, the communication device 1500 may be the second device in the embodiments of the present disclosure, and the communication device 1500 may implement corresponding processes implemented by the second device in respective methods of the embodiments of the present disclosure, and the description thereof will not be repeated here for the sake of simplicity.

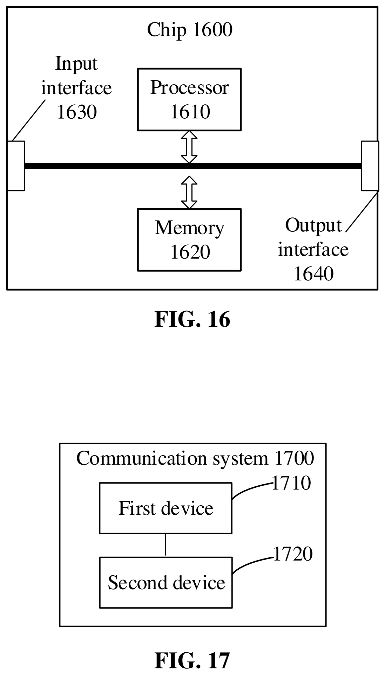

FIG. 16 is a schematic structural diagram of a chip 1600 according to an embodiment of the present disclosure. The chip 1600 includes a processor 1610. The processor is configured to invoke and execute a computer program from a memory to implement the method in the embodiments of the present disclosure. In one possible implementation, the chip 1600 may further include a memory 1620. Here, the processor 1610 may invoke and execute a computer program from the memory 1620 to implement a method performed by the first device or the second device in the embodiments of the present disclosure. The memory 1620 may be a separate device independent of the processor 1610 or may be integrated in the processor 1610. In one possible implementation, the chip 1600 may further include an input interface 1630. The processor 1610 may control the input interface 1630 to communicate with other devices or chips, specifically, to acquire information or data sent by other devices or chips. In one possible implementation, the chip 1600 may further include an output interface 1640. The processor 1610 may control the output interface 1640 to communicate with other devices or chips, specifically, to output information or data to other devices or chips.

In one possible implementation, the chip may be applied to the first device in the embodiments of the present disclosure, and the chip may implement corresponding processes implemented by the first device in respective methods of the embodiments of the present disclosure, and the description thereof will not be repeated here for the sake of simplicity. In one possible implementation, the chip may be applied to the second device in the embodiments of the present disclosure, and the chip may implement corresponding processes implemented by the second device in respective methods of the embodiments of the present disclosure, and the description thereof will not be repeated here for the sake of simplicity. The chips applied to the first device and the second device may be the same chip or different chips. It should be understood that the chip mentioned in the embodiments of the present disclosure may also be referred to as a system level chip, a system chip, a chip system or a system-on-chip. The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The general-purpose processor mentioned above may be a microprocessor or any conventional processor or the like. The memory mentioned above may be a volatile memory or a non-volatile memory, or may include both volatile and non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM). It should be understood that the above memory is illustrative but not limiting, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in the embodiments of the present disclosure is intended to include, but is not limited to, these and any other suitable type of memory.

FIG. 17 is a schematic block diagram of a communication system 1700 according to an embodiment of the present disclosure. The communication system 1700 includes the first device 1710 and the second device 1710. The first device 1710 may be used to implement the corresponding functions implemented by the first device in the above method, the second device 1720 may be used to implement the corresponding functions implemented by the second device in the above method, and the description thereof will not be repeated here for the sake of simplicity.

The above embodiments may be implemented in whole or in part by software, hardware, firmware, or any combination thereof. When implemented using software, they may be implemented in whole or in part in the form of a computer program product. The computer program product includes one or more computer instructions. When the computer program instructions are loaded and executed on a computer, the processes or functions according to the embodiments of the present disclosure are generated in whole or in part. The computer may be a general purpose computer, a special purpose computer, a computer network, or other programmable device. The computer instructions may be stored in a computer readable storage medium or transmitted from one computer readable storage medium to another computer readable storage medium, for example, the computer instructions may be transmitted from one website site, computer, server, or data center to another website site, computer, server, or data center via wired (for example, coaxial cable, optical fiber, Digital Subscriber Line (DSL)) or wireless (for example, infrared, wireless, microwave, etc.) means. The computer readable storage medium may be any available medium accessible by a computer or a data storage device such as a server, a data center, or the like that contains one or more available medium integrations. The available medium may be a magnetic medium (for example, a floppy disk, a hard disk, a magnetic tape), an optical medium (for example, a DVD), or a semiconductor medium (for example, a Solid State Disk (SSD)), etc.

It should be understood that in various embodiments of the present disclosure, the sequence numbers of the above processes do not mean the sequence of execution, and the sequence of execution of various processes should be determined by their functions and internal logics, and should not constitute any limitation on the implementation of the embodiments of the present disclosure. Those skilled in the art can clearly understand that for convenience and conciseness of the description, the specific working processes of the systems, devices, and units described above may refer to the corresponding processes in the aforementioned method embodiments, and will not be repeatedly described herein. The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of claims.

## Claims

1.  A method for key generation, comprising:

    sending, by a first device, a plurality of first messages to a second device, wherein different first messages among the plurality of first messages occupy different time domain ranges, and the plurality of first messages are used for the second device to generate a key;
    receiving, by the first device, a plurality of second messages sent by the second device, wherein different second messages among the plurality of second messages are related to different first messages, and a last one of the plurality of second messages carries the key of the second device;
    generating, by the first device, a verification key of the second device based on the plurality of second messages and a target model; and
    in a case that the verification key of the second device is consistent with the key of the second device, sending, by the first device, an acknowledgement message to the second device.

2.  The method of claim 1, wherein generating, by the first device, the verification key of the second device based on the plurality of second messages and the target model comprises:

    obtaining, by the first device, a plurality of parameter estimation values based on the plurality of second messages and the target model, wherein different parameter estimation values among the plurality of parameter estimation values are estimation values of related parameters of different first messages obtained by the second device; and
    determining, by the first device, the verification key of the second device based on the plurality of parameter estimation values.

3.  The method of claim 2, wherein obtaining, by the first device, the plurality of parameter estimation values based on the plurality of second messages and the target model comprises:

    preprocessing, by the first device, a related parameter of each of the plurality of second messages to obtain a preprocessed related parameter of each second message; and
    inputting, by the first device, the preprocessed related parameter of each second message into the target model to obtain the plurality of parameter estimation values output by the target model.

4.  The method of claim 3, wherein preprocessing, by the first device, the related parameter of each of the plurality of second messages to obtain the preprocessed related parameter of each second message comprises:

> determining, by the first device, a first standard deviation and a first mean value based on the related parameter of each of the plurality of second messages; and
>
> preprocessing, by the first device, the related parameter of each second message based on the first mean value and the first standard deviation, to obtain the preprocessed related parameter of each second message.

5. The method of claim 2, wherein obtaining, by the first device, the plurality of parameter estimation values based on the plurality of second messages and the target model comprises:
inputting, by the first device, a related parameter of each of the plurality of second messages into the target model to obtain the plurality of parameter estimation values output by the target model, wherein the target model is used to preprocess the related parameter of each second message to obtain a preprocessed related parameter of each second message, and the plurality of parameter estimation values are obtained based on the preprocessed related parameter of each second message.

6. The method of any one of claims 2 to 5, wherein the last second message carries a plurality of quantization offsets, and different quantization offsets among the plurality of quantization offsets are associated with the related parameters of different first messages obtained by the second device,

> wherein determining, by the first device, the verification key of the second device based on the plurality of parameter estimation values comprises:
> obtaining, by the first device, a plurality of quantization reference estimation values based on the plurality of parameter estimation values and the plurality of quantization offsets;
> determining, by the first device, a plurality of quantization estimation results based on an index value of each of the plurality of quantization reference estimation values; and
> obtaining, by the first device, the verification key of the second device based on the plurality of quantization estimation results.

7. The method of any one of claims 1 to 6, further comprising:
training, by the first device, a preset model based on training data to obtain the target model, wherein the training data is related to following parameters: a related parameter of each of a plurality of third messages sent by the first device and obtained by the second device and a related parameter of each of a plurality of reflection messages sent by the second device and obtained by the first device, wherein different reflection messages among the plurality of reflection messages are related to different third messages.

8. The method of any one of claims 2 to 7, wherein the related parameter comprises reception strength.

9. The method of any one of claims 2 to 7, wherein the related parameter comprises a phase.

10. The method of claim 8, wherein a transmission power of each of the plurality of first messages is a random transmission power.

11. The method of claim 10, wherein different second messages among the plurality of second messages are obtained by modulating different first messages by the second device based on reflection coefficient(s).

12. The method of claim 11, wherein different second messages among the plurality of second messages correspond to different reflection coefficients.

13. The method of claim 11 or 12, wherein different first messages among the plurality of first messages carry different reflection coefficient indication information, and the different reflection coefficient indication information is used to indicate reflection coefficient(s) corresponding to different second messages.

14. The method of claim 9, wherein a phase of each of the plurality of first messages is a random phase.

15. The method of claim 14, wherein different second messages among the plurality of second messages carry different timestamps, and phases of different second messages are related to phases of the first messages.

16. The method of any one of claims 1 to 15, wherein the last second message carries a Message Authentication code (MAC), wherein the MAC is generated based on the key of the second device; and
the method further comprises:

generating, by the first device, information to be authenticated based on the verification key of the second device and the last second message;
in a case that the information to be authenticated is consistent with the MAC, determining, by the first device, that the verification key of the second device is consistent with the key of the second device.

17. The method of any one of claims 1 to 16, further comprising:
sending, by the first device, a fourth message to the second device, wherein the fourth message carries a number of the first messages for generating the key.

18. The method of any one of claims 1 to 17, wherein the first device is a first terminal or a first network device, and the second device is a zero-power device.

19. A method for key generation, comprising:

receiving, by a second device, a plurality of first messages sent by a first device, wherein different first messages among the plurality of first messages occupy different time domain ranges;
generating, by the second device, a key of the second device based on the plurality of first messages;
sending, by the second device, a plurality of second messages to the first device, wherein different second messages among the plurality of second messages are related to different first messages, and a last one of the plurality of second messages carries the key of the second device; and
in a case that the second device receives an acknowledgement message sent by the first device, determining, by second device, that a key verification of the second device is passed.

20. The method of claim 19, wherein generating, by the second device, the key of the second device based on the plurality of first messages comprises:

obtaining, by the second device, a second mean value and a second standard deviation based on a related parameter of each of the plurality of first messages;
obtaining, by the second device, a plurality of processed related parameters based on the second mean value, the second standard deviation, and the related parameter of each first message;
obtaining, by the second device, a plurality of quantization reference values based on the plurality of processed related parameters; and
generating, by the second device, the key of the second device based on the plurality of quantization reference values.

21. The method of claim 20, wherein obtaining, by the second device, the plurality of quantization reference values based on the plurality of processed related parameters comprises:
determining, by the second device based on a plurality of candidate quantization reference values, a candidate quantization reference value with a minimum difference from an m-th processed related parameter to be an m-th quantization reference value, wherein the plurality of candidate quantization reference values are determined based on the related parameter of each first message, the m-th processed related parameter is one of the plurality of processed related parameters, the m-th quantization reference value is one of the plurality of quantization reference values, and m is a positive integer.

22. The method of claim 20 or 21, wherein generating, by the second device, the key of the second device based on the plurality of quantization reference values comprises:

determining, by the second device, a plurality of quantization results based on an index value of each of the plurality of quantization reference values; and
generating, by the second device, the key of the second device based on the plurality of quantization results.

23. The method of any one of claims 20 to 22, wherein the last second message carries a plurality of quantization offsets, and the method further comprises:
obtaining, by the second device, the plurality of quantization offsets based on the plurality of quantization reference values and the plurality of processed related parameters.

24. The method of any one of claims 20 to 23, wherein the related parameter is reception strength.

25. The method of any one of claims 20 to 23, wherein the related parameter is a phase.

26. The method of claim 24, wherein a transmission power of each of the plurality of first messages is a random transmission power.

27. The method of claim 26, wherein different second messages among the plurality of second messages are obtained by modulating different first messages by the second device based on reflection coefficient(s).

28. The method of claim 27, wherein different second messages among the plurality of second messages correspond to different reflection coefficients.

29. The method of claim 27 or 28, wherein different first messages among the plurality of first messages carry different reflection coefficient indication information, and the different reflection coefficient indication information is used to indicate reflection coefficients corresponding to different second messages.

30. The method of claim 25, wherein a phase of each of the plurality of first messages is a random phase.

31. The method of claim 30, wherein different second messages among the plurality of second messages carry different timestamps, and phases of different second messages are related to phases of the first messages.

32. The method of any one of claims 19 to 31, wherein the last second message carries a Message Authentication code (MAC), and the MAC is generated based on the key of the second device.

33. The method of any one of claims 19 to 32, further comprising:
   receiving, by the second device, a fourth message sent by the first device, wherein the fourth message carries a number of the first messages for generating the key.

34. The method of any one of claims 19 to 33, wherein the first device is a first terminal or a first network device, and the second device is a zero-power device.

35. A first device, comprising:

   a first communication unit, configured to send a plurality of first messages to a second device, wherein different first messages among the plurality of first messages occupy different time domain ranges, and the plurality of first messages are used for the second device to generate a key, and receive a plurality of second messages sent by the second device, wherein different second messages among the plurality of second messages are related to different first messages, and a last one of the plurality of second messages carries the key of the second device; and
   a first processing unit, configured to generate a verification key of the second device based on the plurality of second messages and a target model, and send an acknowledgement message to the second device through the first communication unit in a case that the verification key of the second device is consistent with the key of the second device.

36. The first device claim 35, wherein the first processing unit is configured to obtain a plurality of parameter estimation values based on the plurality of second messages and the target model, and determine the verification key of the second device based on the plurality of parameter estimation values, wherein different parameter estimation values among the plurality of parameter estimation values are estimation values of related parameters of different first messages obtained by the second device.

37. The first device of claim 36, wherein the first processing unit is configured to preprocess a related parameter of each of the plurality of second messages to obtain a preprocessed related parameter of each second message, and input the preprocessed related parameter of each second message into the target model to obtain the plurality of parameter estimation values output by the target model.

38. The first device of claim 37, wherein the first processing unit is configured to determine a first standard deviation and a first mean value based on the related parameter of each of the plurality of second messages, and preprocess the related parameter of each second message based on the first mean value and the first standard deviation, to obtain the preprocessed related parameter of each second message.

39. The first device of claim 36, wherein the first processing unit is configured to input a related parameter of each of the plurality of second messages into the target model to obtain the plurality of parameter estimation values output by the target model, wherein the target model is used to preprocess the related parameter of each second message to obtain a preprocessed related parameter of each second message, and the plurality of parameter estimation values are obtained based on the preprocessed related parameter of each second message.

40. The first device of any one of claims 36 to 39, wherein the last second message carries a plurality of quantization offsets, and different quantization offsets among the plurality of quantization offsets are associated with the related parameters of different first messages obtained by the second device,
wherein the first processing unit is configured to obtain a plurality of quantization reference estimation values based on the plurality of parameter estimation values and the plurality of quantization offsets, determine a plurality of quantization estimation results based on an index value of each of the plurality of quantization reference estimation values, and obtain the verification key of the second device based on the plurality of quantization estimation results.

41. The first device of any one of claims 35 to 40, wherein the first processing unit is configured to train a preset model based on training data, to obtain the target model, wherein the training data is related to following parameters: a related parameter of each of a plurality of third messages sent by the first device and obtained by the second device, and a related parameter of each of a plurality of reflection messages sent by the second device and obtained by the first device, wherein different reflection messages among the plurality of reflection messages are related to different third messages.

42. The first device of any one of claims 36 to 41, wherein the related parameter comprises reception strength.

43. The first device of any one of claims 36 to 41, wherein the related parameter comprises a phase.

44. The first device of claim 42, wherein a transmission power of each of the plurality of first messages is a random transmission power.

45. The first device of claim 44, wherein different second messages among the plurality of second messages are obtained by modulating different first messages by the second device based on reflection coefficient(s).

46. The first device of claim 45, wherein different second messages among the plurality of second messages correspond to different reflection coefficients.

47. The first device of claim 45 or 46, wherein different first messages among the plurality of first messages carry different pieces of reflection coefficient indication information, and the different reflection coefficient indication information is used to indicate reflection coefficient(s) corresponding to different second messages.

48. The first device of claim 43, wherein a phase of each of the plurality of first messages is a random phase.

49. The first device of claim 48, wherein different second messages among the plurality of second messages carry different timestamps, and the phases of different second messages are related to phases of the first messages.

50. The first device of any one of claims 35 to 49, wherein the last second message carries a Message Authentication code (MAC), and the MAC is generated based on the key of the second device;
wherein the first processing unit is configured to generate information to be authenticated based on the verification key of the second device and the last second message, and determine that the verification key of the second device is consistent with the key of the second device in a case that the information to be authenticated is consistent with the MAC.

51. The first device of any one of claims 35 to 50, wherein the first communication unit is configured to send a fourth message to the second device, wherein the fourth message carries a number of the first messages for generating the key.

52. The first device of any one of claims 35 to 51, wherein the first device is a first terminal or a first network device, and the second device is a zero-power device.

53. A second device, comprising:

a second communication unit, configured to receive a plurality of first messages sent by a first device, and send a plurality of second messages to the first device, wherein different first messages among the plurality of first messages occupy different time domain ranges, different second messages among the plurality of second messages are related to different first messages, and a last one of the plurality of second messages carries a key of the second device; and

a second processing unit, configured to generate the key of the second device based on the plurality of first messages, and determine that a key verification of the second device is passed in a case that an acknowledgement message sent by the first device is received through the second communication unit.

54. The second device of claim 53, wherein the second processing unit is configured to obtain a second mean value and a second standard deviation based on a related parameter of each of the plurality of first messages, obtain a plurality of processed related parameters based on the second mean value, the second standard deviation, and the related parameter of each first message, obtain a plurality of quantization reference values based on the plurality of processed related parameters, and generate the key of the second device based on the plurality of quantization reference values.

55. The second device of claim 54, wherein the second processing unit is configured to determine, based on a plurality of candidate quantization reference values, a candidate quantization reference value with a minimum difference from an m-th processed related parameter to be an m-th quantization reference value, wherein the plurality of candidate quantization reference values are determined based on the related parameter of each first message, the m-th processed related parameter is one of the plurality of processed related parameters, the m-th quantization reference value is one of the plurality of quantization reference values, and m is a positive integer.

56. The second device of claim 54 or 55, wherein the second processing unit is configured to determine a plurality of quantization results based on an index value of each of the plurality of quantization reference values, and generate the key of the second device based on the plurality of quantization results.

57. The second device of any one of claims 54 to 56, wherein the last second message carries a plurality of quantization offsets, and the second processing unit is configured to obtain the plurality of quantization offsets based on the plurality of quantization reference values and the plurality of processed related parameters.

58. The second device of any one of claims 54 to 57, wherein the related parameter is reception strength.

59. The second device of any one of claims 54 to 57, wherein the related parameter is a phase.

60. The second device of claim 58, wherein a transmission power of each of the plurality of first messages is a random transmission power.

61. The second device of claim 60, wherein different second messages among the plurality of second messages are obtained by modulating different first messages by the second device based on reflection coefficient(s).

62. The second device of claim 61, wherein different second messages among the plurality of second messages correspond to different reflection coefficients.

63. The second device of claim 61 or 62, wherein different first messages among the plurality of first messages carry different pieces of reflection coefficient indication information, and the different pieces of reflection coefficient indication information are used to indicate reflection coefficient(s) corresponding to different second messages.

64. The second device of claim 59, wherein a phase of each of the plurality of first messages is a random phase.

65. The second device of claim 64, wherein different second messages among the plurality of second messages carry different timestamps, and phases of different second messages are related to phases of the first messages.

66. The second device of any one of claims 53 to 65, wherein the last second message carries a Message Authentication code (MAC), and the MAC is generated based on the key of the second device.

**67.** The second device of any one of claims 53 to 66, wherein the second communication unit is configured to receive a fourth message sent by the first device, wherein the fourth message carries a number of the first messages for generating the key.

**68.** The second device of any one of claims 53 to 67, wherein the first device is a first terminal or a first network device, and the second device is a zero-power device.

**69.** A first device comprising: a transceiver, a processor and a memory, wherein the memory is configured to store a computer program, and the processor is configured to invoke and execute the computer program stored in the memory to cause the first device to perform the method of any one of claims 1 to 18.

**70.** A second device comprising: a transceiver, a processor and a memory, wherein the memory is configured to store a computer program, and the processor is configured to invoke and execute the computer program stored in the memory to cause the second device to perform the method of any one of claims 19 to 34.

**71.** A chip comprising: a processor configured to invoke and execute a computer program from a memory to cause a device on which the chip is mounted to perform the method of any one of claims 1 to 18, or claims 19 to 34.

**72.** A computer readable storage medium for storing a computer program that, when executed by a device, causes the device to perform the method of any one of claims 1 to 18, or claims 19 to 34.

**73.** A computer program product comprising computer program instructions that cause a computer to perform the method of any one of claims 1 to 18, or claims 19 to 34.

**74.** A computer program causing a computer to perform the method of any one of claims 1 to 18, or claims 19 to 34.

**100**

**FIG. 1**

Reader        Tag

Power harvesting | Back scattering communication | Low-power computing

**FIG. 2**

The first device sends multiple first messages to the second device. Different first messages among the multiple first messages occupy different time domain ranges, and the multiple first messages are used for the second device to generate a key ⌐S310

The first device receives multiple second messages sent by the second device. Different second messages among the multiple second messages are related to different first messages, and a last one of the multiple second messages carries the key of the second device ⌐S320

The first device generates a verification key of the second device based on the multiple second messages and the target model ⌐S330

In a case that the verification key of the second device is consistent with the key of the second device, the first device sends an acknowledgement message to the second device ⌐S340

**FIG. 3**

The second device receives multiple first messages sent by the first device. Different first messages among the multiple first messages occupy different time domain ranges ⌐S410

The second device generates a key of the second device based on the multiple first messages ⌐S420

The second device sends multiple second messages to the first device. Different second messages among the multiple second messages are related to different first messages, and a last one of the multiple second messages carries the key of the second device ⌐S430

In a case that the second device receives an acknowledgement message sent by the first device, it is determined that the key verification of the second device is passed ⌐S440

**FIG. 4**

**FIG. 5**

**FIG. 6**

| Reader | | Tag |
|---|---|---|

S701,The reader sends a Query command to the tag. The Query command carries the number of the first messages for generating the key

S702,Initializes the slot counter

S703,The reader sends the first one of the first messages with a random transmission power

The tag sends the first one of the second messages

. . .

S703,The reader sends the (M-1)-th first message with a random transmission power

The tag sends the (M-1)-th one of the second messages

S703,The reader sends the M-th one of the first messages with a random transmission power

S704,In a case that the tag receives the M-th one of the first messages, generate the key of the tag based on the reception strength of each first message

S705,The tag sends the last one of the second messages to the reader

S706,The reader preprocesses the reception strength of each of the M second messages to obtain the preprocessed reception strength of each second message

S707,The reader inputs the preprocessed reception strength of each second message into the target model to obtain M parameter estimation values output by the target model

S708,The reader determines the verification key of the tag based on the M parameter estimation values

NO

YES

S709,Consistent

Error flag

S710,The reader sends an acknowledgement message to the tag

S711,The tag sends the fifth message to the reader. The fifth message carries the EPC encrypted by the key of the tag

**FIG. 7**

**FIG. 8**

| Reader | | Tag |
|---|---|---|

S901,The reader sends a Query command to the tag. The Query command carries the number of the first messages for generating the key

S902,Initializes the slot counter

S903,The reader sends the first one of the first messages with a random phase

The tag sends the first one of the second messages

. . .

S903,The reader sends the (M-1)-th one of the first messages with a random phase

The tag sends the (M-1)-th one of the second messages

S903,The reader sends the M-th one of the first messages with a random phase

S904, In a case that the tag receives the M-th one of the first messages, generate the key of the tag based on the phase of each first message

S905,The tag sends the last one of the second messages to the reader

S906,The reader preprocesses the phase of each of the M second messages to obtain the preprocessed phase of each second message

S907,The reader inputs the preprocessed phase of each second message into the target model to obtain M parameter estimation values output by the target model

S908,The reader determines the verification key of the tag based on the M parameter estimation values

NO

S909,Consistent

YES

Error flag

S910,The reader sends an acknowledgement message to the tag

S911,The tag sends the fifth message to the reader. The fifth message carries the EPC encrypted by the key of the tag

**FIG. 9**

Input information → Input layer → LSTM hidden layer 1 → Dropout layer → LSTM hidden layer 2 → Dense layer → Output information

**FIG. 10**

**FIG. 11**

FIG. 12

FIG. 13

Second device

| Second communication unit 1401 | Second processing unit 1402 |

**FIG. 14**

Communication device 1500

| Memory 1515 | Processor 1510 |

Transceiver 1530

**FIG. 15**

Chip 1600

Input
interface
1630

Processor
1610

Memory
1620

Output
interface
1640

**FIG. 16**

Communication system 1700

First device —1710

Second device —1720

**FIG. 17**

## INTERNATIONAL SEARCH REPORT

| | International application No. |
|---|---|
| | **PCT/CN2023/080933** |

| A. | CLASSIFICATION OF SUBJECT MATTER |
|---|---|
| | H04L9/08(2006.01)i |

According to International Patent Classification (IPC) or to both national classification and IPC

| B. | FIELDS SEARCHED |
|---|---|

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE: 标签, RFID, NFC, 阅读器, 密钥, 秘钥, 生成, 产生, 创建, 强度, 相位, RSSI, 验证, 检验, 校验, 一致, MAC, tag, reader, key, generation, production, creation, strength, phase, verification, agreement

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 112202511 A (INFORMATION ENGINEERING UNIVERSITY OF PLA) 08 January 2021 (2021-01-08) description, paragraphs [0037]-[0057] | 1-74 |
| Y | WO 2013138867 A1 (SECURE NFC PTY. LTD.) 26 September 2013 (2013-09-26) description, page 11, lines 8-11 | 1-74 |
| A | US 2013236007 A1 (DIGITAL LOBE, LLC) 12 September 2013 (2013-09-12) entire document | 1-74 |
| A | US 2020044840 A1 (SAMSUNG ELECTRONICS CO., LTD.) 06 February 2020 (2020-02-06) entire document | 1-74 |
| A | WO 2022198390 A1 (QUALCOMM INC.) 29 September 2022 (2022-09-29) entire document | 1-74 |
| A | WO 2022261478 A1 (IMPINJ, INC.) 15 December 2022 (2022-12-15) entire document | 1-74 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2023** | **14 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/080933**

| Patent document cited in search report | | | Publication date (day/month/year) | Patent family member(s) | | | Publication date (day/month/year) |
|---|---|---|---|---|---|---|---|
| CN | 112202511 | A | 08 January 2021 | None | | | |
| WO | 2013138867 | A1 | 26 September 2013 | None | | | |
| US | 2013236007 | A1 | 12 September 2013 | None | | | |
| US | 2020044840 | A1 | 06 February 2020 | KR | 20180097903 | A | 03 September 2018 |
| | | | | WO | 2018155884 | A1 | 30 August 2018 |
| | | | | EP | 3576339 | A1 | 04 December 2019 |
| | | | | CN | 110337796 | A | 15 October 2019 |
| | | | | IN | 201947036333 | A | 20 September 2019 |
| WO | 2022198390 | A1 | 29 September 2022 | None | | | |
| WO | 2022261478 | A1 | 15 December 2022 | None | | | |

Form PCT/ISA/210 (patent family annex) (July 2022)